# EUROPEAN PATENT SPECIFICATION

(11) **EP 4 475 337 B1**
(45) Date of publication and mention of the grant of the patent: **10.06.2026**
(21) Application number: 23848944.7
(22) Date of filing: 27.04.2023
(51) Int. Cl.: H01Q 1/36, H01Q 1/22, H01Q 1/48, H01Q 1/50

(54) **ANTENNA ASSEMBLY AND ELECTRONIC DEVICE**
ANTENNENANORDNUNG UND ELEKTRONISCHE VORRICHTUNG
ENSEMBLE ANTENNE ET DISPOSITIF ÉLECTRONIQUE

(30) Priority: 04.08.2022 CN 202210934565
(43) Date of publication of application: 11.12.2024
(73) Proprietor: Honor Device Co., Ltd., Shenzhen, Guangdong 518040 (CN)
(72) Inventor: LI, Shichao, Shenzhen, Guangdong 518040 (CN); LIANG, Tiezhu, Shenzhen, Guangdong 518040 (CN); ZHOU, Dawei, Shenzhen, Guangdong 518040 (CN)
(74) Representative: Gill Jennings & Every LLP
(86) International application number: PCT/CN2023/091094
(87) International publication number: WO 2024/027233

(56) References cited:
- EP-A1- 4 138 219
- EP-A1- 4 239 789
- WO-A1-2020/134330
- CN-A- 109 830 815
- CN-A- 110 830 618
- CN-A- 111 384 585
- CN-A- 113 594 697
- CN-A- 114 583 443
- CN-A- 114 583 443
- CN-A- 114 597 630
- CN-A- 114 597 630
- CN-A- 115 296 013
- CN-U- 215 911 582
- US-A1- 2020 051 468

## Description

### TECHNICAL FIELD

Embodiments of this application relate to the field of antenna technologies, and in particular, to an antenna assembly and an electronic device.

### BACKGROUND

With development of mobile communication technologies, electronic devices gradually evolve into foldable electronic devices, to be applicable to and cover more new application scenarios. In addition, design of an antenna assembly in the foldable electronic device also faces more challenges.

The foldable electronic device usually needs to accommodate one or more antenna assemblies of various types in limited space. As the foldable electronic device changes from an unfolded state to a folded state, distances between the antenna assemblies change, and the antenna assemblies are prone to affect each other.

When the foldable electronic device is in the folded state, because a frame on one side may block an antenna, communication performance of the antenna assembly is poor when the foldable electronic device is in the folded state, which affects user experience.

### SUMMARY

Embodiments of this application provide an antenna assembly and an electronic device, to resolve a problem of poor communication performance of a foldable electronic device in a folded state.

According to a first aspect, an embodiment of this application provides an antenna assembly, applied to a foldable electronic device. The electronic device includes a first body and a second body, and the first body and the second body are rotatably connected by using a rotating shaft. The antenna assembly includes a first antenna disposed on the first body and a second antenna disposed on the second body. The first antenna includes a first end away from the rotating shaft and a second end close to the rotating shaft, a first gap is disposed between the first end and the second end, and the first end and the second end are grounded. The first antenna includes at least one feed point. The first antenna is configured to generate a resonance at more than one frequency band. The second antenna includes a third end away from the rotating shaft and a fourth end close to the rotating shaft, a second gap is disposed between the third end and the fourth end, and the third end and the fourth end are grounded. When the first body and the second body are in a folded state, the first gap is in an orthographic projection area of the second gap, so that the second antenna performs electric field coupling by using the second gap and the first gap to form a parasitic structure of the first antenna, where the second antenna is configured to generate a parasitic resonance at one or more than one frequency band.

According to the antenna assembly shown in this application, the first gap is disposed on the first antenna, and the second gap is disposed on the second antenna. In this way, when the foldable electronic device is in the folded state, the first gap is in the orthographic projection area of the second gap, so that the second antenna performs electric field coupling by using the second gap and the first gap to form the parasitic structure of the first antenna. Based on the structure disposing, radiation efficiency of the antenna assembly can be improved and bandwidth of the antenna assembly can be increased, so that the foldable electronic device has better communication performance in the folded state, thereby improving user experience.

The first antenna includes a first sub-antenna, and the first sub-antenna is an antenna between the first end and the first gap. The first sub-antenna includes a first antenna radiator and a first feed point, and the first antenna radiator receives, by using the first feed point, an electrical signal that is input by a first feed source, so that the first antenna radiator generates a first resonance and a second resonance. In this implementation, the foldable electronic device may generate a plurality of resonances by using the first sub-antenna, so that the antenna assembly can be applied to a multi-frequency scenario. The first antenna includes a second sub-antenna, and the second sub-antenna is an antenna between the second end and the first gap. The second sub-antenna includes a second antenna radiator and a second feed point, and the second antenna radiator receives, by using the second feed point, an electrical signal that is input by a second feed source, so that the second antenna radiator generates a third resonance. In this implementation, the foldable electronic device may enable the second sub-antenna to generate a resonance, so that the antenna assembly can be applied to a multi-frequency scenario.

The antenna assembly includes at least one of a first resonance mode, a second resonance mode, and a third resonance mode. The first resonance mode is a mode in which the antenna assembly works at a working frequency band of the first resonance, and is used to support receiving and sending of an electromagnetic wave signal at the working frequency band of the first resonance; the second resonance mode is a mode in which the antenna assembly works at a working frequency band of the second resonance, and is used to support receiving and sending of an electromagnetic wave signal at the working frequency band of the second resonance; and the third resonance mode is a mode in which the antenna assembly works at a working frequency band of the third resonance, and is used to support receiving and sending of an electromagnetic wave signal at the working frequency band of the third resonance. In this implementation, the antenna assembly may work at a plurality of different working frequency bands, so that the antenna assembly can be applied to a multi-frequency scenario. The second antenna includes a third sub-antenna and a fourth sub-antenna, the third sub-antenna is an antenna between the third end and the second gap, the fourth sub-antenna is an antenna between the fourth end and the second gap, the third sub-antenna includes a third antenna radiator, a first tuning circuit, and a second tuning circuit, and the fourth sub-antenna includes a fourth antenna radiator. The first tuning circuit and the second tuning circuit are configured to adjust working frequency bands of the third antenna radiator and the fourth antenna radiator, so that the third antenna radiator and the fourth antenna radiator generate a first parasitic resonance, a second parasitic resonance, and a third parasitic resonance, where a working frequency band of the first parasitic resonance is higher than that of the first resonance, a working frequency band of the second parasitic resonance is higher than that of the second resonance, and a working frequency band of the third parasitic resonance is higher than that of the third resonance. In this implementation, for the foldable electronic device, a tuning circuit is disposed on the third sub-antenna, so that the third sub-antenna and the fourth sub-antenna can generate a parasitic resonance corresponding to the first antenna, thereby improving radiation efficiency of the antenna assembly and increasing bandwidth of the antenna assembly.

In an implementation, when the antenna assembly is in the first resonance mode, the first sub-antenna and the second sub-antenna are in a slot-antenna common-mode mode with strong current distribution, and current distribution of the third sub-antenna and the fourth sub-antenna is in a same direction as that of the first sub-antenna; when the antenna assembly is in the second resonance mode, the first sub-antenna and the second sub-antenna are in a slot-antenna common-mode mode with strong current distribution, and current distribution of the third sub-antenna and the fourth sub-antenna is in a same direction as that of the second sub-antenna; or when the antenna assembly is in the third resonance mode, the first sub-antenna and the second sub-antenna are in a slot-antenna differential-mode mode with strong current distribution, and current distribution of the third sub-antenna and the fourth sub-antenna is in a slot-antenna common-mode mode from the second tuning circuit to the fourth sub-antenna, and is in a same direction as current distribution of the second sub-antenna, where the second tuning circuit is a tuning circuit close to one end of the second gap. In this implementation, the first antenna may receive co-directional current excitation from the second antenna to improve radiation efficiency.

In an implementation, the first sub-antenna further includes a third tuning circuit, and the third tuning circuit is configured to be grounded. When the antenna assembly is in the first resonance mode, the first sub-antenna and the second sub-antenna are in a slot-antenna common-mode mode with strong current distribution, and current distribution of the third sub-antenna and the fourth sub-antenna is in a same direction as that of the first sub-antenna; when the antenna assembly is in the second resonance mode, the first sub-antenna and the second sub-antenna are in a slot-antenna common-mode mode with strong current distribution, and current distribution of the third sub-antenna and the fourth sub-antenna is in a same direction as that of the second sub-antenna; or when the antenna assembly is in the third resonance mode, the first sub-antenna and the second sub-antenna are in a slot-antenna common-mode mode with strong current distribution, and current distribution of the third sub-antenna and the fourth sub-antenna is in a slot-antenna common-mode mode from the second tuning circuit to the fourth sub-antenna, and is in a same direction as current distribution of the second sub-antenna. In this implementation, the first antenna may receive co-directional current excitation from the second antenna to improve radiation efficiency.

In a comparative implementation, the second antenna includes a third sub-antenna and a fourth sub-antenna, the third sub-antenna is an antenna between the third end and the second gap, the fourth sub-antenna is an antenna between the fourth end and the second gap, the third sub-antenna includes a third antenna radiator, and the fourth sub-antenna includes a fourth antenna radiator. When the third sub-antenna is set to a first length and the fourth sub-antenna is set to a second length, the third antenna radiator and the fourth antenna radiator generate a fourth parasitic resonance and a fifth parasitic resonance, where a working frequency band of the fourth parasitic resonance is higher than that of the second resonance, and a working frequency band of the fifth parasitic resonance is higher than that of the third resonance. In this implementation, the foldable electronic device adaptively sets lengths of the third sub-antenna and the fourth sub-antenna, so that a parasitic resonance can be generated on each of the third sub-antenna and the fourth sub-antenna, to improve radiation efficiency of the antenna assembly and increase bandwidth of the antenna assembly.

In a comparative implementation, when the antenna assembly is in the first resonance mode, the first sub-antenna and the second sub-antenna are in a slot-antenna common-mode mode with strong current distribution, and current distribution of the third sub-antenna and the fourth sub-antenna is in a same direction as that of the first sub-antenna; when the antenna assembly is in the second resonance mode, the first sub-antenna and the second sub-antenna are in a slot-antenna common-mode mode with strong current distribution, and current distribution of the third sub-antenna and the fourth sub-antenna is in a same direction as that of the second sub-antenna; or when the antenna assembly is in the third resonance mode, the first sub-antenna and the second sub-antenna are in a slot-antenna differential-mode mode with strong current distribution, current distribution of the third sub-antenna is in a same direction as that of the first sub-antenna, and current distribution of the fourth sub-antenna is in a same direction as that of the second sub-antenna. In this implementation, the first antenna may receive co-directional current excitation from the second antenna to improve radiation efficiency.

In a comparative implementation, the second antenna includes a third sub-antenna and a fourth sub-antenna, the third sub-antenna is an antenna between the third end and the second gap, the fourth sub-antenna is an antenna between the fourth end and the second gap, the third sub-antenna includes a third antenna radiator, and the fourth sub-antenna includes a fourth antenna radiator. When the third sub-antenna is set to a third length and the fourth sub-antenna is set to a fourth length, the third antenna radiator and the fourth antenna radiator generate a sixth parasitic resonance, where a working frequency band of the sixth parasitic resonance is higher than that of the third resonance. In this implementation, the foldable electronic device adaptively sets lengths of the third sub-antenna and the fourth sub-antenna, so that a parasitic resonance can be generated on the fourth sub-antenna, to improve radiation efficiency of the antenna assembly and increase bandwidth of the antenna assembly.

In a comparative implementation, when the antenna assembly is in the first resonance mode, the first sub-antenna and the second sub-antenna are in a slot-antenna common-mode mode with strong current distribution, and current distribution of the third sub-antenna and the fourth sub-antenna is in a same direction as that of the first sub-antenna; when the antenna assembly is in the second resonance mode, the first sub-antenna and the second sub-antenna are in a slot-antenna common-mode mode with strong current distribution, and current distribution of the third sub-antenna and the fourth sub-antenna is in a same direction as that of the second sub-antenna; or when the antenna assembly is in the third resonance mode, the first sub-antenna and the second sub-antenna are in a slot-antenna differential-mode mode with strong current distribution, and current distribution of the third sub-antenna and the fourth sub-antenna is in a same direction as that of the second sub-antenna. In this implementation, the first antenna may receive co-directional current excitation from the second antenna to improve radiation efficiency.

In a comparative implementation, the second antenna includes a third sub-antenna and a fourth sub-antenna, the third sub-antenna is an antenna between the third end and the second gap, the fourth sub-antenna is an antenna between the fourth end and the second gap, the third sub-antenna includes a third antenna radiator and a first tuning circuit, and the fourth sub-antenna includes a fourth antenna radiator and a second tuning circuit. The first tuning circuit and the second tuning circuit are configured to adjust working frequency bands of the third antenna radiator and the fourth radiator, so that the third antenna radiator and the fourth antenna radiator generate a seventh parasitic resonance and an eighth parasitic resonance. In this implementation, for the foldable electronic device, a tuning circuit is disposed on each of the third sub-antenna and the fourth sub-antenna, so that the third sub-antenna and the fourth sub-antenna can generate a parasitic resonance corresponding to the first antenna, thereby improving radiation efficiency of the antenna assembly and increasing bandwidth of the antenna assembly.

In a comparative implementation, the first antenna includes a second sub-antenna, and the second sub-antenna is an antenna between the second end and the first gap. The second sub-antenna includes a second antenna radiator, a first tuning switch is disposed between the first sub-antenna and the second sub-antenna, and the first tuning switch is configured to adjust a working frequency band at which the first antenna radiator and the second antenna radiator generate a target resonance. In this implementation, the foldable electronic device may switch between different frequency bands by using the first tuning switch, so that the first antenna can work on different frequency bands.

In a comparative implementation, the second antenna includes a third sub-antenna and a fourth sub-antenna, the third sub-antenna is an antenna between the third end and the second gap, the fourth sub-antenna is an antenna between the fourth end and the second gap, the third sub-antenna includes a third antenna radiator, and the fourth sub-antenna includes a fourth antenna radiator. A second tuning switch is disposed between the third sub-antenna and the fourth sub-antenna, and the second tuning switch is configured to adjust a working frequency band at which the third antenna radiator and the fourth antenna radiator generate a target parasitic resonance, so that the working frequency band of the target parasitic resonance is greater than the working frequency band of the target resonance. In this implementation, the foldable electronic device may work on different frequency bands by using the second tuning switch, so that the second antenna can generate parasitic resonances that correspond to the first antenna and that are at different frequency bands.

In an implementation, the first antenna includes at least one of a multiple-input multiple-output MIMO antenna, a Bluetooth antenna, a wireless fidelity Wifi antenna, and a long term evolution LTE antenna.

In an implementation, the second antenna includes at least one of a multiple-input multiple-output MIMO antenna, a Bluetooth antenna, a wireless fidelity Wifi antenna, and a long term evolution LTE antenna.

According to a second aspect, an embodiment of this application provides an electronic device, including the antenna assembly according to the first aspect and the implementations of the first aspect.

According to the antenna assembly and the electronic device shown in the embodiments of this application, the foldable electronic device has better communication performance in the folded state, thereby improving user experience.

### BRIEF DESCRIPTION OF DRAWINGS

To describe technical solutions in embodiments of this application more clearly, the following briefly describes accompanying drawings required in the embodiments. Clearly, a person of ordinary skill in the art may still derive other accompanying drawings from these accompanying drawings without creative efforts.
FIG. 1 is a schematic diagram of a foldable electronic device according to an embodiment of this application;
FIG. 2 is a schematic diagram of an antenna disposing manner according to an embodiment of this application;
FIG. 3 is a schematic diagram of a foldable electronic device in a folded-unfolded state according to an embodiment of this application;
FIG. 4 is a schematic diagram of an antenna disposing manner according to an embodiment of this application;
FIG. 5 is a schematic diagram of another antenna disposing manner according to an embodiment of this application;
FIG. 6 is a schematic diagram of a hardware structure of an electronic device according to an embodiment of this application;
FIG. 7 is a schematic diagram of an antenna assembly according to an embodiment of this application;
FIG. 8 is a first schematic diagram of an antenna assembly according to an embodiment of this application;
FIG. 9 is a schematic diagram of a return loss of an antenna assembly according to an embodiment of this application;
FIG. 10 is a schematic diagram of current distribution in a first resonance mode according to an embodiment of this application;
FIG. 11 is a schematic diagram of current distribution in a second resonance mode according to an embodiment of this application;
FIG. 12 is a schematic diagram of current distribution in a third resonance mode according to an embodiment of this application;
FIG. 13 is a schematic diagram of comparison between radiation efficiency effects according to an embodiment of this application;
FIG. 14 is a second schematic diagram of an antenna assembly according to an embodiment of this application;
FIG. 15 is a schematic diagram of a return loss of an antenna assembly according to an embodiment of this application;
FIG. 16 is a schematic diagram of current distribution in a first resonance mode according to an embodiment of this application;
FIG. 17 is a schematic diagram of current distribution in a second resonance mode according to an embodiment of this application;
FIG. 18 is a schematic diagram of current distribution in a third resonance mode according to an embodiment of this application;
FIG. 19 is a schematic diagram of comparison between radiation efficiency effects according to an embodiment of this application;
FIG. 20 is a schematic diagram of comparison between radiation efficiency effects according to an embodiment of this application;
FIG. 21 is a third schematic diagram of an antenna assembly according to an embodiment of this application;
FIG. 22 is a schematic diagram of a return loss according to an embodiment of this application;
FIG. 23 is a schematic diagram of current distribution in a first resonance mode according to an embodiment of this application;
FIG. 24 is a schematic diagram of current distribution in a second resonance mode according to an embodiment of this application;
FIG. 25 is a schematic diagram of current distribution in a third resonance mode according to an embodiment of this application;
FIG. 26 is a schematic diagram of comparison between radiation efficiency effects according to an embodiment of this application;
FIG. 27 is a schematic diagram of comparison between radiation efficiency effects according to an embodiment of this application;
FIG. 28 is a fourth schematic diagram of an antenna assembly according to an embodiment of this application;
FIG. 29 is a fifth schematic diagram of an antenna assembly according to an embodiment of this application; and
FIG. 30 is a sixth schematic diagram of an antenna assembly according to an embodiment of this application.

### DESCRIPTION OF EMBODIMENTS

The following clearly describes the technical solutions in the embodiments of this application with reference to the accompanying drawings in the embodiments of this application.

In the descriptions of this application, unless otherwise specified, "/" means "or". For example, A/B may represent A or B. In this specification, "and/or" is merely an association relationship for describing associated objects, and represents that three relationships may exist. For example, "A and/or B" may represent the following three cases: Only A exists, both A and B exist, and only B exists. In addition, "at least one" means one or more, and "a plurality of" means two or more. The words such as "first" and "second" do not limit a quantity or an execution sequence, and the words such as "first" and "second" do not indicate a definite difference.

It should be noted that in this application, the words such as "example" or "for example" are used to represent giving an example, an illustration, or a description. Any embodiment or design solution described as an "example" or "for example" in this application should not be explained as being more preferred or having more advantages than other embodiments or design solutions. Exactly, the words such as "example" or "for example" are used to present related concepts in a specific manner.

The following first describes an application scenario of the embodiments of this application with reference to the accompanying drawings.

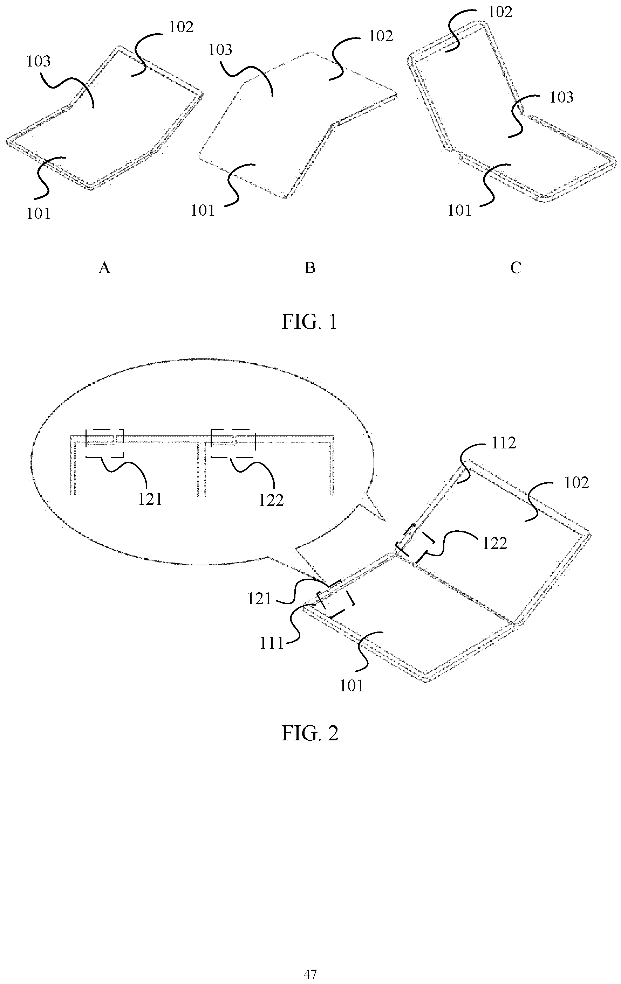

FIG. 1 is a schematic diagram of a foldable electronic device according to an embodiment of this application. The foldable electronic device is an electronic device with a foldable body. The foldable electronic device usually includes a first body 101, a second body 102 rotatably connected to the first body 101 by using a rotating shaft, and a display screen 103 disposed on one side of each of the first body 101 and the second body 102. Based on the foregoing structure, the foldable electronic device may be disposed as an inward foldable electronic device shown in A in FIG. 1, an outward foldable electronic device shown in B in FIG. 1, and an up-and-down foldable electronic device shown in C in FIG. 1. A folding manner and a folding angle of the foldable electronic device are not limited in this embodiment of this application.

To ensure communication performance of the foldable electronic device, a plurality of antennas are usually disposed in the foldable electronic device to perform wireless communication at different frequency bands.

FIG. 2 is a schematic diagram of an antenna disposing manner according to an embodiment of this application. As shown in FIG. 2, an inward foldable electronic device is used as an example. For the inward foldable electronic device, a first dominant-frequency antenna 121 (a frequency coverage area may be, for example, 700 MHz-3 GHz) may be disposed on a first frame 111 of the first body 101, and a second dominant-frequency antenna 122 (a frequency coverage area may be, for example, 700 MHz-3 GHz) may be disposed on a second frame 112 of the second body 102.

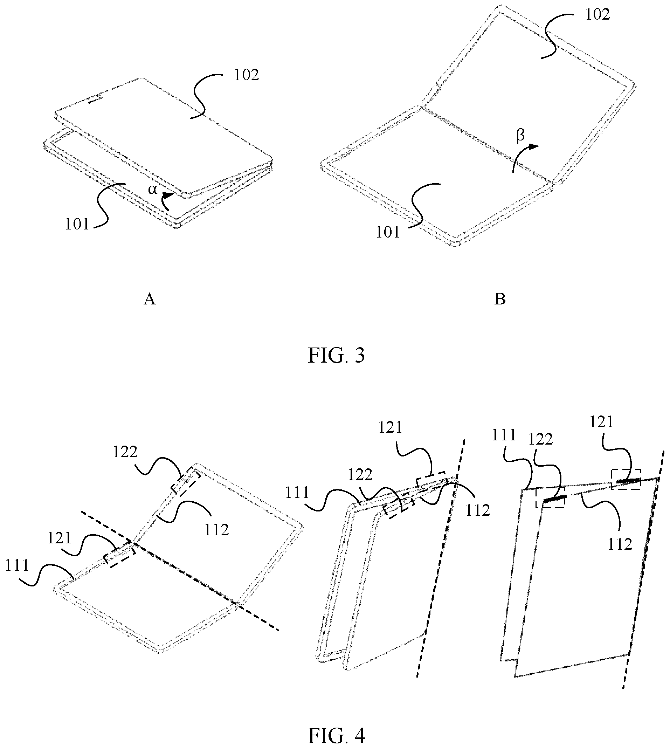

FIG. 3 is a schematic diagram of a foldable electronic device in a folded-unfolded state according to an embodiment of this application. The foldable electronic device has two states: a folded state and an unfolded state. As shown in A in FIG. 3, the folded state may be a state in which an angle between a part of display screen disposed on one side of the first body 101 and a part of display screen disposed on one side of the second body 102 is less than a first angle α (for example, 15 degrees) when the first body 101 rotates by using the rotating shaft. As shown in B in FIG. 3, the unfolded state may be a state in which an angle between a part of display screen disposed on one side of the first body 101 and a part of display screen disposed on one side of the second body 102 is greater than a second angle β (for example, 120 degrees) when the first body 101 rotates by using the rotating shaft. When the foldable electronic device changes from the unfolded state to the folded state, a relative location relationship between the first dominant-frequency antenna 121 and the second dominant-frequency antenna 122 changes.

When the foldable electronic device is in the unfolded state, a distance between the first dominant-frequency antenna 121 and the second dominant-frequency antenna 122 is relatively long, and both the first dominant-frequency antenna 121 and the second dominant-frequency antenna 122 can work independently without interfering with each other. However, when the foldable electronic device is in the folded state, the distance between the first dominant-frequency antenna 121 and the second dominant-frequency antenna 122 is relatively short, and consequently, signal interference may occur between the first dominant-frequency antenna 121 and the second dominant-frequency antenna 122, which affects communication performance of the foldable electronic device.

FIG. 4 is a schematic diagram of an antenna disposing manner according to an embodiment of this application. As shown in FIG. 4, to avoid signal interference between the first dominant-frequency antenna 121 and the second dominant-frequency antenna 122, the foldable electronic device may be designed to implement avoidance between the first dominant-frequency antenna 121 and the second dominant-frequency antenna 122. In specific implementation, when the foldable electronic device is in the folded state, the first dominant-frequency antenna 121 is disposed on a side that is of a top edge of the first frame 111 and that is close to the rotating shaft, the second dominant-frequency antenna 122 is disposed on a side that is of the top edge of the second frame 112 and that is away from the rotating shaft, and there is no overlapping part between a projection area of the first dominant-frequency antenna 121 and a disposing location of the second dominant-frequency antenna 122. In this case, the first dominant-frequency antenna 121 and the second dominant-frequency antenna 122 are independent of each other, and the first dominant-frequency antenna 121 and the second dominant-frequency antenna 122 may correspond to different working frequency bands, and do not interfere with each other.

In the disposing manner in the foregoing embodiment, although the first dominant-frequency antenna 121 and the second dominant-frequency antenna 122 do not interfere with each other, the first dominant-frequency antenna 121 and the second dominant-frequency antenna 122 cannot improve signal strength of each other. Therefore, another antenna disposing manner is further provided in a related technology to enhance signal strength.

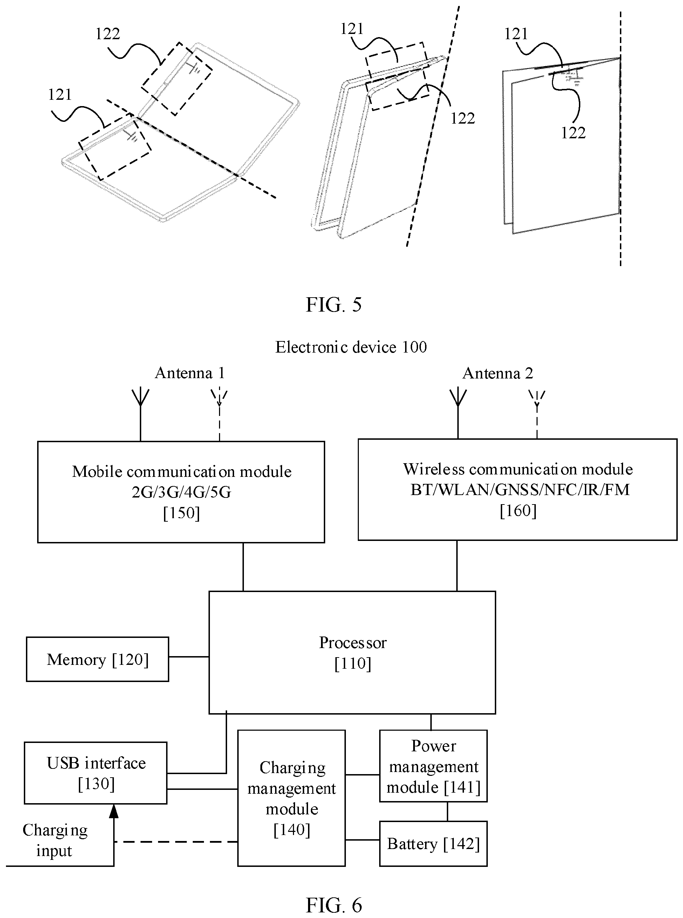

FIG. 5 is a schematic diagram of another antenna disposing manner according to an embodiment of this application. As shown in FIG. 5, when the foldable electronic device is in the folded state, a working frequency band of the second dominant-frequency antenna 122 is adjusted, so that the second dominant-frequency antenna 122 becomes an adjustable parasitic branch of the first dominant-frequency antenna 121. This can avoid mutual interference between the first dominant-frequency antenna 121 and the second dominant-frequency antenna 122, and enhance signal strength of the first dominant-frequency antenna 121, thereby improving communication performance of the foldable electronic device. However, in this embodiment, based on the structure of the antenna assembly, the first dominant-frequency antenna 121 generates only a single resonance, and the second dominant-frequency antenna 122 as the adjustable parasitic branch also generates only a single resonance. As a result, the antenna setting manner shown in this embodiment of this application is not applicable to a multi-resonance scenario.

It can be learned that, to make the foldable electronic device applicable to the multi-resonance scenario and improve communication performance of the foldable electronic device, embodiments of this application provide an antenna assembly. The antenna assembly provided in the embodiments of this application may be applied to an electronic device. The electronic device includes but is not limited to a foldable electronic device. The electronic device may be provided with an antenna, and the antenna may be used to support the electronic device to implement a wireless communication function. The electronic device includes but is not limited to a mobile phone, a tablet computer, a personal computer, a workstation device, a large-screen device (for example, a smart screen or a smart television), a wearable device (for example, a smart band or a smartwatch), a handheld game console, a home game console, a virtual reality device, an augmented reality device, a hybrid reality device, an in-vehicle intelligent terminal, and the like.

FIG. 6 is a schematic diagram of a hardware structure of an electronic device according to an embodiment of this application. As shown in FIG. 6, the electronic device 100 may include a processor 110, a memory 120, a universal serial bus (universal serial bus, USB) interface 130, a charging management module 140, a power management module 141, a battery 142, an antenna 1, an antenna 2, a mobile communication module 150, a wireless communication module 160, and the like.

It may be understood that the structure illustrated in this embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The memory 120 may be configured to store computer-executable program code. The executable program code includes instructions. The memory 120 may include a program storage area and a data storage area. The program storage area may store an operating system, an application program required by at least one function (for example, a sound playing function or an image playing function), and the like. The data storage area may store data (such as audio data and a phone book) and the like created during use of the electronic device 100. In addition, the memory 120 may include a high-speed random access memory, and may further include a non-volatile memory, for example, at least one magnetic disk storage device, a flash memory device, or a universal flash storage (universal flash storage, UFS). The processor 110 performs various function applications and data processing of the electronic device 100 by running the instructions stored in the memory 120 and/or instructions stored in a memory disposed in the processor.

The USB interface 130 is an interface that complies with USB standard specifications, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device, may be configured to connect to a headset to play audio by using the headset. The interface may alternatively be configured to connect to another electronic device, for example, an AR device.

It may be understood that, an interface connection relationship between the modules illustrated in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger, or may be a wired charger. In some embodiments of wired charging, the charging management module 140 may receive a charging input from a wired charger through the USB interface 130. In some embodiments of wireless charging, the charging management module 140 may receive a wireless charging input by using a wireless charging coil of the electronic device 100. When charging the battery 142, the charging management module 140 may further supply power to the electronic device by using the power management module 141.

The power management module 141 is configured to connect to the battery 142, the charging management module 140, and the processor 110. The power management module 141 receives an input of the battery 142 and/or an input of the charging management module 140, and supplies power to the processor 110, the memory 120, a display screen 193, a camera 192, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communication module 150 may provide a solution for wireless communication including 2G/3G/4G/5G and the like applied to the electronic device 100. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation by using the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor and then transferred to the application processor. The application processor outputs a sound signal by using an audio device (not limited to a speaker 170A or a receiver 170B), or displays an image or a video by using the display screen 193. In some embodiments, the modem processor may be an independent device. In some other embodiments, the modem processor may be independent of the processor 110, and is disposed in a same device as the mobile communication module 150 or another functional module.

The wireless communication module 160 may provide a solution for wireless communication that is applied to the electronic device 100 and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

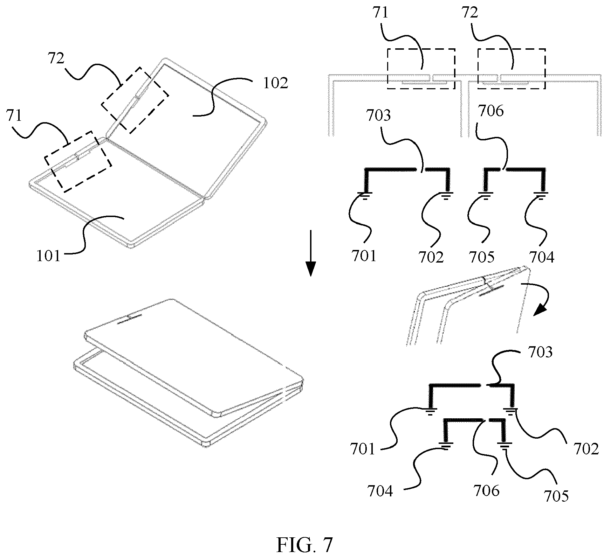

FIG. 7 is a schematic diagram of an antenna assembly according to an embodiment of this application. As shown in FIG. 7, the antenna assembly provided in this embodiment of this application includes a first antenna 71 and a second antenna 72. The first antenna 71 may be disposed on a first body 101 of a foldable electronic device, the second antenna 72 may be disposed on a second body 102 of the foldable electronic device, and the first body 101 and the second body 102 are rotatably connected by using a rotating shaft. The first antenna 71 includes a first end 701 away from the rotating shaft and a second end 702 close to the rotating shaft, and both the first end 701 and the second end 702 are grounded. A first gap 703 is disposed between the first end 701 and the second end 702. The second antenna 72 includes a third end 704 away from the rotating shaft and a fourth end 705 close to the rotating shaft, and both the third end 704 and the fourth end 705 are grounded. A second gap 706 is disposed between the third end 704 and the fourth end 705. When the first body 101 and the second body 102 are in a folded state, the first gap 703 is in an orthographic projection area of the second gap 706.

In some embodiments, when an angle between a part of display screen on one side of the first body 101 and a part of display screen disposed on one side of the second body 102 is 0 degrees, a distance between the rotating shaft and an end that is of the first gap 703 and that is close to the rotating shaft is equal to a distance between the rotating shaft and an end that is of the second gap 706 and that is close to the rotating shaft, and a distance between the rotating shaft and an end that is of the first gap 703 and that is away from the rotating shaft is equal to a distance between the rotating shaft and an end that is of the second gap 706 and that is away from the rotating shaft.

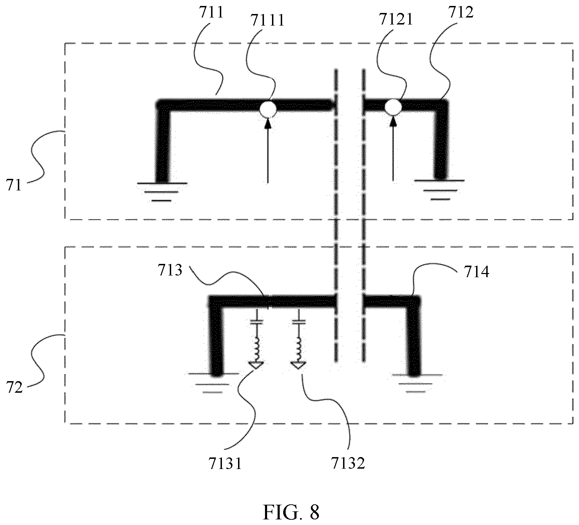

FIG. 8 is a first schematic diagram of an antenna assembly according to an embodiment of this application. As shown in FIG. 8, the first antenna 71 includes a first sub-antenna 711 and a second sub-antenna 712. The first sub-antenna 711 is an antenna between the first end 701 and the first gap 703, and the second sub-antenna 712 is an antenna between the second end 702 and the first gap 703. The second antenna 72 includes a third sub-antenna 713 and a fourth sub-antenna 714. The third sub-antenna 713 is an antenna between the third end 704 and the second gap 706, and the fourth sub-antenna 714 is an antenna between the fourth end 705 and the second gap 706. Because the first gap 703 is in the orthographic projection area of the second gap 706, the first sub-antenna 711, the second sub-antenna 712, the third sub-antenna 713, and the fourth sub-antenna 714 form a port-to-port parallel four-branch structure. In this case, the second antenna 72 performs electric field coupling by using the second gap 706 and the first gap 703, so that the second antenna 72 forms a parasitic structure of the first antenna 71. In this embodiment of this application, description is merely provided for a case in which the third sub-antenna 713 and the fourth sub-antenna 714 serve as parasitic structures of the first sub-antenna 711 and the second sub-antenna 712.

It should be noted herein that a width of the first body 101 may be equal to or unequal to a width of the second body 102. The first antenna 71 may be disposed on a first frame 111 of the first body 101, and the second antenna 72 may be disposed on a second frame 112 of the second body 102. The first frame 111 may be a metal frame, or may be a non-metal frame (for example, a plastic frame or a glass frame). The first antenna 71 may be disposed on a metal frame, or may be disposed on an inner surface of a non-metal frame. The first antenna 71 may be disposed on any of a top edge, a left side edge, and a right side edge of the first frame 111. This is not limited in this embodiment of this application. A disposing manner of the second frame 112 may be the same as that of the first frame 111, and a disposing manner of the second antenna 72 may be similar to that of the first antenna 71. Details are not described again in this application.

Specific types of the first antenna 71 and the second antenna 72 may include at least one of a multiple-input multiple-output (Multiple Input Multiple Output, MIMO) antenna, a Bluetooth (Bluetooth) antenna, a wireless fidelity (Wireless Fidelity, Wifi) antenna, or a long term evolution (Long Term Evolution, LTE) antenna. The first antenna 71 and the second antenna 72 may be of a same type, or may be of different types. Specific materials of the first antenna 71 and the second antenna 72 may include at least one of a polyimide (Polyimide, PI) film, a liquid crystal polymer (LiquidCrystalPolymer, LCP), or modified polyimide (ModifiedPolyimide, MPI). The first antenna 71 and the second antenna 72 may be of a same material, or may be of different materials. Specific types and specific materials of the first antenna 71 and the second antenna 72 are not limited in this embodiment of this application.

Based on the foregoing structure, the first antenna 71 may work in a multi-frequency scenario, and the second antenna 72 may correspondingly generate a plurality of parasitic resonances.

In some embodiments, the first sub-antenna 711 includes a first antenna radiator and a first feed point 7111, and the first antenna radiator receives, by using the first feed point 7111, an electrical signal that is input by a first feed source, so that the first antenna radiator generates a first resonance and a second resonance.

The first antenna radiator may be implemented by using one or more of a flexible circuit board antenna, a stamped metal antenna, or a laser-direct-structuring antenna. The first antenna radiator may further reuse a metal structural member in the foldable electronic device. For example, when the first frame 111 is a metal frame, a radiation function of the first antenna radiator may be implemented at a corresponding location of the first antenna radiator by using the metal frame.

The first feed point 7111 may be a location at which a radio frequency module is connected to the antenna in the foldable electronic device. To implement a feeding function in the antenna assembly, components such as a metal elastic piece and an ejector pin may be used at the first feed point 7111 to implement connection between the first feed source and the first antenna radiator. For example, the first feed source is a radio frequency module disposed on a printed circuit board. In a transmission scenario, a radio frequency signal may be transmitted to an electrical connection component (such as the metal elastic piece or the ejector pin) at the location of the first feed point 7111 by using the radio frequency module on the printed circuit board, so that the radio frequency signal can be transmitted to the first antenna radiator through rigid connection of the electrical connection component or through welding of a material with a point such as an electronic line on the printed circuit board. Therefore, the first antenna radiator can transmit the radio frequency signal in a form of an electromagnetic wave at a working frequency band corresponding to the first sub-antenna 711. Correspondingly, in a receiving scenario, for example, a low-frequency electromagnetic wave signal is received. The first antenna radiator may receive the low-frequency electromagnetic wave signal, convert the low-frequency electromagnetic wave signal into an analog signal, and feed back the analog signal to the radio frequency module by using the first feed point 7111, thereby receiving the low-frequency electromagnetic wave signal.

It should be noted herein that, the first feed point 7111 is not merely disposed as a welding point in actual, and a corresponding feeding structure needs to be specifically disposed. In the feeding structure, a matching circuit is disposed to be electrically connected to a feed of the first antenna radiator (for example, by using a structure such as an elastic piece or a screw), so that the first antenna radiator generates two resonances by using the first feed point 7111. In some embodiments, a proper matching network may be disposed for the first sub-antenna 711 to correspond to the first feed point 7111, so that the first sub-antenna 711 implements a plurality of resonances. For example, the first sub-antenna 711 obtains a resonance with a working frequency band of 1.6 GHz and a resonance with a working frequency band of 2.4 GHz through matching by using the matching network. In other words, the first sub-antenna 711 can support a GPS working frequency band (a central frequency is 1.575 GHz), a Wifi 2.4 GHz working frequency band, and an N41 working frequency band (2.515 GHz-2.675 GHz).

It should be noted herein that, the multi-frequency resonance of the first sub-antenna 711 may be generated in at least one of a quarter-wavelength mode, a half-wavelength mode, and a three-quarter wavelength mode. A wavelength mode in which the multi-frequency resonance is generated is not limited in this application.

In some embodiments, the second sub-antenna 712 includes a second antenna radiator and a second feed point 7121, and the second antenna radiator receives, by using the second feed point 7121, an electrical signal that is input by a second feed source, so that the second antenna radiator generates a third resonance.

In specific implementation, a proper matching network may be disposed for the second sub-antenna 712 to correspond to the second feed point 7121, so that the second sub-antenna 712 generates a resonance at at least one frequency band. For example, the second sub-antenna 712 obtains a resonance with a working frequency band of 3.5 GHz through matching by using the matching network.

It should be noted herein that, the matching network disposed for the second sub-antenna 712 to correspond to the second feed point 7121 is a matching network disposed on the second antenna radiator, the second feed point 7121 is not merely a welding point in actual either, and a corresponding feeding structure is also specifically disposed. In the feeding structure, a matching circuit is disposed to be electrically connected to a feed of the second antenna radiator (for example, by using a structure such as an elastic piece or a screw), so that the second antenna radiator generates one resonance by using the second feed point 7121.

It should be noted that a matching network is disposed for each of the first feed point 7111 and the second feed point 7121 in the following embodiments. Details are not described in this application.

A feeding manner of the second feed source is similar to a feeding manner of the first feed source, and details are not described again in this embodiment of this application.

The first sub-antenna 711 and the second sub-antenna 712 may be designed in a dual-feed manner to cover more working frequency bands. For example, when the first sub-antenna 711 can support both the GPS working frequency band and the N41 working frequency band, the second sub-antenna 712 can receive a radio frequency signal from the second feed point 7121, and generate a third resonance at 3.5 GHz, that is, the second sub-antenna 712 can support an N78 working frequency band (3.5 GHz-3.6 GHz).

It should be noted that, working frequency bands of the first sub-antenna 711 and the second sub-antenna 712 are not limited to the working frequency bands shown in the foregoing embodiment. For example, the second sub-antenna 712 can generate a resonance at an N78 frequency band and a resonance at a 5G frequency band during actual working.

In this embodiment of this application, the third sub-antenna 713 and the fourth sub-antenna 714 serve as parasitic branches of the first sub-antenna 711 and the second sub-antenna 712, and receive feeding generated by the first sub-antenna 711 and the second sub-antenna 712 through energy coupling by using the first gap 703 and the second gap 706.

In some embodiments, the antenna assembly includes at least one of a first resonance mode, a second resonance mode, and a third resonance mode. The first resonance mode is a mode in which the antenna assembly works at a working frequency band of the first resonance, and is used to support receiving and sending of an electromagnetic wave at the working frequency band of the first resonance; the second resonance mode is a mode in which the antenna assembly works at a working frequency band of the second resonance, and is used to support receiving and sending of an electromagnetic wave signal at the working frequency band of the second resonance; and the third resonance mode is a mode in which the antenna assembly works at a working frequency band of the third resonance, and is used to support receiving and sending of an electromagnetic wave signal at the working frequency band of the third resonance.

For example, the first resonance mode may be a mode in which the antenna assembly works at the GPS working frequency band, the second resonance mode may be a mode in which the antenna assembly works at the N41 working frequency band and a mode in which the antenna assembly works at the Wifi 2.4 GHz working frequency band, and the third resonance mode may be a mode in which the antenna assembly works at the N78 working frequency band.

A capacitor and an inductor are loaded at a proper location of the parasitic branch, so that the third sub-antenna 713 and the fourth sub-antenna 714 can generate a proper parasitic resonance.

In some embodiments, the third sub-antenna 713 includes a third radiator, a first tuning circuit 7131, and a second tuning circuit 7132, and the fourth sub-antenna 714 includes a fourth antenna radiator. The first tuning circuit 7131 and the second tuning circuit 7132 are configured to adjust working frequency bands of the third antenna radiator and the fourth antenna radiator, so that the third antenna radiator and the fourth antenna radiator generate a first parasitic resonance, a second parasitic resonance, and a third parasitic resonance. A working frequency band of the first parasitic resonance is higher than that of the first resonance, a working frequency band of the second parasitic resonance is higher than that of the second resonance, and a working frequency band of the third parasitic resonance is higher than that of the third resonance.

It should be noted herein that, after receiving energy coupling, the third antenna radiator and the fourth antenna radiator jointly perform a function to generate a plurality of parasitic resonances.

The first tuning circuit 7131 includes a first capacitor and a first inductor, and is located on a side close to the third end 704. The second tuning circuit 7132 includes a second capacitor and a second inductor, and is located on a side close to the second gap 706. The first tuning circuit 7131 and the second tuning circuit 7132 may adjust the matching network by adjusting magnitudes of capacitance and inductance, a grounding location, and the like, so as to adjust working frequency bands of the first parasitic resonance, the second parasitic resonance, and the third parasitic resonance to generate parasitic resonances at a plurality of different frequency bands, thereby increasing bandwidth of the antenna assembly.

For example, when the first resonance F1 is at 1.6 GHz, the second resonance F2 is at 2.4 GHz, and the third resonance F3 is at 3.5 GHz, the third sub-antenna 713 is loaded with the first capacitor and the first inductor, so that the third antenna radiator and the fourth antenna radiator generate the second parasitic resonance Q2 at 2.6 GHz, and the third sub-antenna 713 is loaded with the second capacitor and the second inductor, so that the third antenna radiator and the fourth antenna radiator generate the third parasitic resonance Q3 at 3.8 GHz. In addition, because the first capacitor, the first inductor, the second capacitor, and the second inductor may be equivalent to capacitors near the first resonance, the third sub-antenna 713 and the fourth sub-antenna 714 are capacitively loaded, so that the first parasitic resonance Q1 at 1.8 GHz is generated.

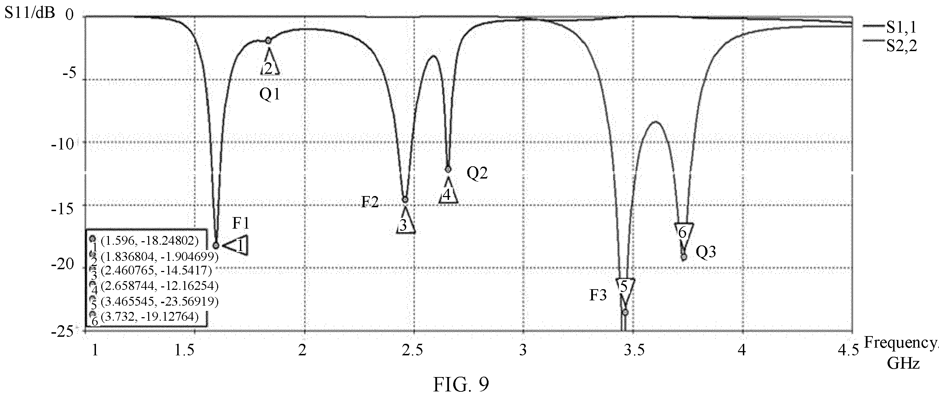

FIG. 9 is a schematic diagram of a return loss according to an embodiment of this application. As shown in FIG. 9, the antenna assembly may cover the GPS working frequency band, the N41 working frequency band, the Wifi 2.4 GHz working frequency band, and the N78 working frequency band by using the first parasitic resonance Q1 at 1.8 GHz, the second parasitic resonance Q2 at 2.6 GHz, and the third parasitic resonance Q3 at 3.8 GHz, to increase bandwidth of the antenna assembly.

It should be noted herein that, the return loss diagram of the antenna assembly provided in this embodiment of this application shows a relationship between a working frequency of the antenna assembly and a reflection coefficient S11, where a horizontal coordinate of the return loss diagram is the frequency in units of GHz, and a vertical coordinate is the reflection coefficient S11 in units of dB. The reflection coefficient S11 is one of scattering parameters, and indicates a return loss characteristic. Generally, a dB value and an impedance characteristic of a loss of the antenna assembly are viewed by using a network analyzer. The reflection coefficient S11 indicates adaptability of a degree of matching between the antenna assembly and a front-end circuit. A larger value of the reflection coefficient S11 indicates more energy reflected from the antenna assembly and worse matching of the antenna assembly. For example, a value of S11 of an antenna A at a frequency is -1, a value of S11 of an antenna B at the same frequency is -3, and a matching degree of the antenna B is better than that of the antenna A.

Based on the foregoing structure, the parasitic resonance generated by the second antenna 72 may not only increase working bandwidth of the first antenna 71, but also improve radiation efficiency of the first antenna 71. In specific implementation, the second antenna 72 may excite the first antenna 71, so that the first antenna 71 obtains a slot-antenna common-mode (Slot CM) mode or a slot-antenna differential-mode (Slot DM) mode, and the first antenna 71 forms a co-directional excitation current by using the slot-antenna common-mode mode or the slot-antenna differential-mode mode that is obtained through excitation by the second antenna 72, to improve radiation efficiency of the antenna assembly.

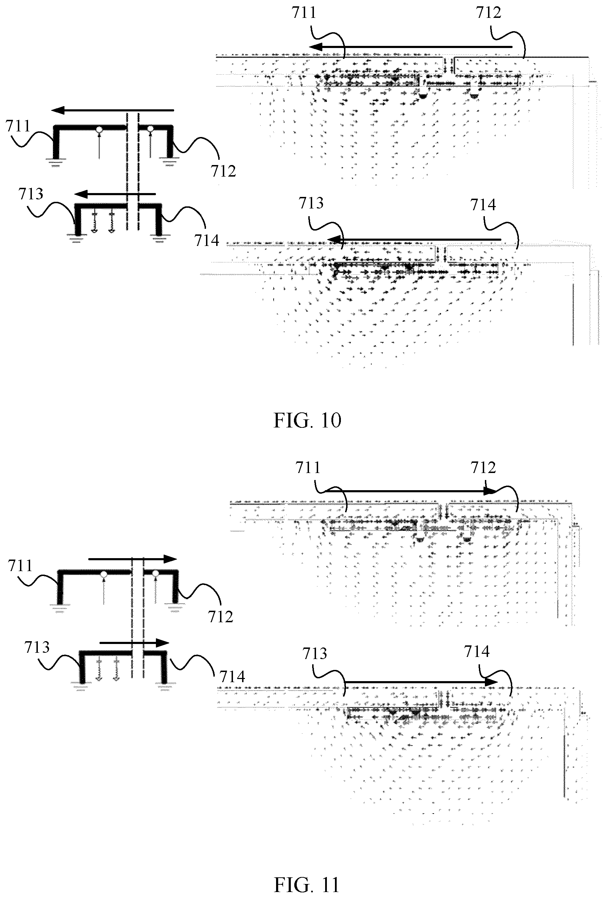

FIG. 10 is a schematic diagram of current distribution in a first resonance mode according to an embodiment of this application. As shown in FIG. 10, when the antenna assembly works in the first resonance mode, the first sub-antenna 711 and the second sub-antenna 712 are in a slot-antenna common-mode mode with strong current distribution, and current distribution of the third sub-antenna 713 and the fourth sub-antenna 714 is in a same direction as that of the first sub-antenna 711.

FIG. 11 is a schematic diagram of current distribution in a second resonance mode according to an embodiment of this application. As shown in FIG. 11, when the antenna assembly works in the second resonance mode, the first sub-antenna 711 and the second sub-antenna 712 are in a slot-antenna common-mode mode with strong current distribution, and current distribution of the third sub-antenna 713 and the fourth sub-antenna 714 is in a same direction as that of the second sub-antenna 712.

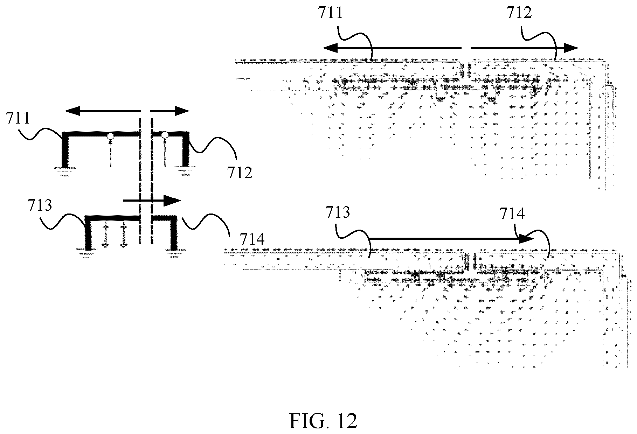

FIG. 12 is a schematic diagram of current distribution in a third resonance mode according to an embodiment of this application. As shown in FIG. 12, when the antenna assembly works in the third resonance mode, the first sub-antenna 711 and the second sub-antenna 712 are in a slot-antenna differential-mode mode with strong current distribution, and current distribution of the third sub-antenna 713 and the fourth sub-antenna 714 is in a slot-antenna common-mode mode from the second tuning circuit 7132 to the fourth sub-antenna 714, and is in a same direction as current distribution of the second sub-antenna 712, where the second tuning circuit 7132 is a tuning circuit close to one end of the second gap 706. In specific implementation, the second tuning circuit 7132 is grounded, so that a corresponding current distribution mode from the second tuning circuit 7132 to the fourth sub-antenna 714 in the second antenna 72 is the slot-antenna common-mode mode.

It should be noted herein that, a working frequency of the antenna assembly is related to alternating current distribution. When the antenna assembly works in the first resonance mode, the first antenna 71 corresponds to the current distribution shown in FIG. 10. In this case, the second antenna 72 generates co-directional current distribution, and the co-directional current distribution forms a co-directional excitation current, so that the second antenna 72 can improve radiation efficiency of the first antenna 71. Another resonance mode is similar to this. Details are not described again in this embodiment of this application.

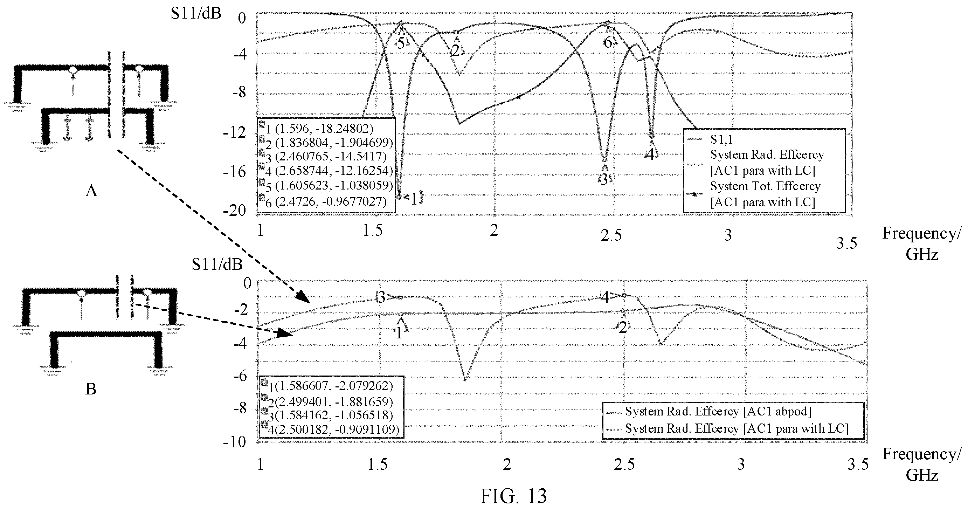

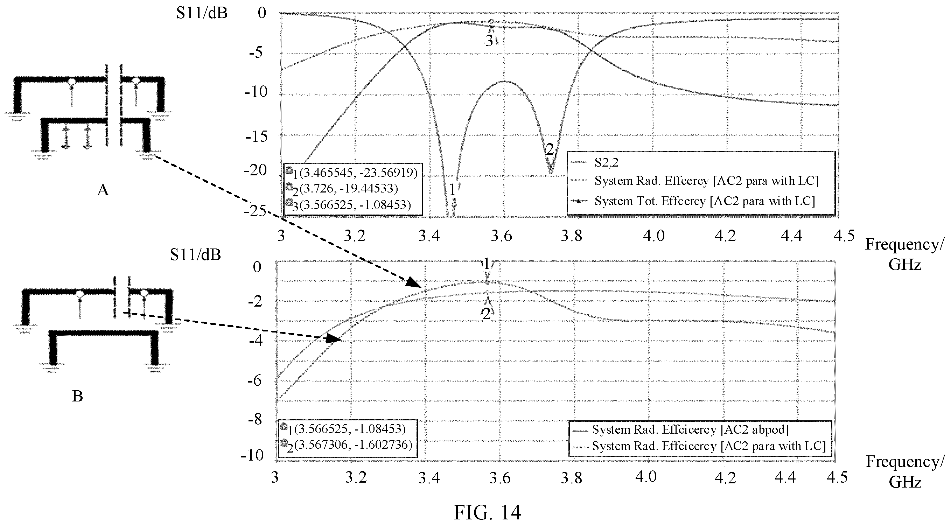

FIG. 13 and FIG. 14 are schematic diagrams of comparison between radiation efficiency effects according to an embodiment of this application. Through comparison between radiation efficiency of the antenna assembly that is in this embodiment of this application and that is shown by A in FIG. 13 and radiation efficiency of an antenna assembly that is shown by B in FIG. 13 and in which the second antenna 72 is not provided with the second gap 706, it may be found that when the foldable electronic device is in the folded state, compared with the antenna assembly in which the second antenna 72 is not provided with the second gap 706, for the antenna assembly shown in this embodiment of this application, radiation efficiency of the first resonance is improved by 1 dB, radiation efficiency of the second resonance is improved by 0.9 dB, and as shown in FIG. 14, radiation efficiency of the third resonance is improved by 0.5 dB.

Radiation efficiency may be used to indicate a difference that is obtained for a current antenna assembly in a case of multi-port excitation and that is between energy input from a port and energy fed back to the port after radiation and loss. Higher radiation efficiency indicates smaller energy fed back to the port, and can indicate a radiation efficiency level that can be achieved by the current antenna assembly. The radiation efficiency may be a maximum radiation capability that can be provided by the current antenna assembly.

The first antenna assembly shown in this embodiment of this application is in a most preferred disposing manner. The first tuning circuit and the second tuning circuit are disposed to form an optimal matching network to generate a multi-feed multi-frequency antenna assembly, so that a plurality of parasitic resonances can be generated, thereby better increasing bandwidth at the GPS, N41, Wifi 2.4 GHz, and N78 working frequency bands, and better improving radiation efficiency at the GPS frequency band and the N41, Wifi 2.4 GHz, and N78 working frequency bands.

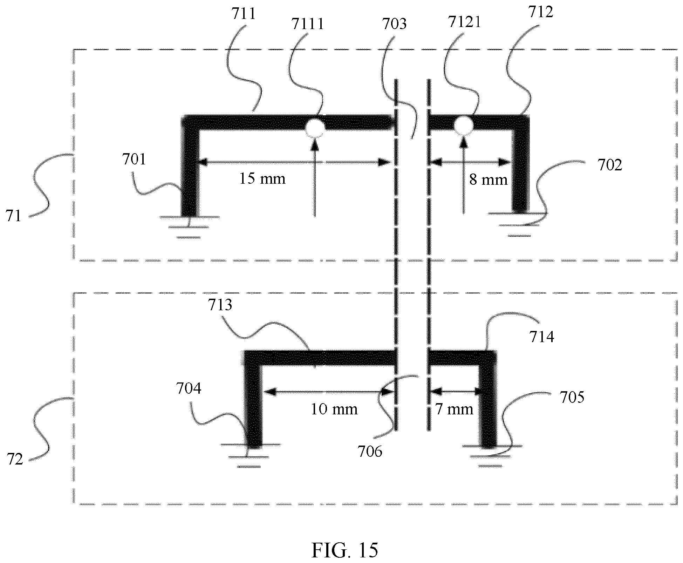

FIG. 15 is a second schematic diagram of an antenna assembly according to an embodiment of this application. As shown in FIG. 15, in the antenna assembly provided in this embodiment of this application, the first sub-antenna 711 includes a first antenna radiator and a first feed point 7111, and the first antenna radiator receives, by using the first feed point 7111, an electrical signal that is input by a first feed source, so that the first antenna radiator generates a first resonance and a second resonance. The second sub-antenna 712 includes a second antenna radiator and a second feed point 7121, and the second antenna radiator receives, by using the second feed point 7121, an electrical signal that is input by a second feed source, so that the second antenna radiator generates a third resonance.

After receiving feeding, the third sub-antenna 713 and the fourth sub-antenna 714 can generate resonance frequencies corresponding to structure sizes of the third sub-antenna 713 and the fourth sub-antenna 714, to improve radiation efficiency of the antenna assembly and increase working bandwidth of the antenna assembly.

In specific implementation, the third sub-antenna 713 and the fourth sub-antenna 714 are designed with a proper length, so that the third sub-antenna 713 and the fourth sub-antenna 714 generate a proper parasitic resonance at a location corresponding to the first antenna 71.

In some embodiments, the third sub-antenna 713 includes a third radiator, and the fourth sub-antenna 714 includes a fourth radiator. When the third sub-antenna 713 is set to a first length and the fourth sub-antenna 714 is set to a second length, the third antenna radiator and the fourth antenna radiator generate a fourth parasitic resonance and a fifth parasitic resonance. A working frequency band of the fourth parasitic resonance is higher than that of the second resonance, and a working frequency band of the fifth parasitic resonance is higher than that of the third resonance. The first length needs to be set to correspond to a length of the first sub-antenna 711, and the second length needs to be set to correspond to a length of the second sub-antenna 712. In this way, for the antenna assembly, radiation efficiency of the antenna assembly can be improved and working bandwidth of the antenna assembly can be increased by simply adjusting the first length and the second length.

It should be noted herein that, only when a proper matching network (for example, the first tuning circuit and the second tuning circuit in the first antenna assembly) cannot be disposed, a location of a parasitic resonance is adjusted by adjusting a length. Through comparison between the disposing manner of the second antenna assembly and the disposing manner of the first antenna assembly, although radiation efficiency of the antenna assembly can be improved and bandwidth of the antenna assembly can be increased, an actual improvement effect of the first antenna assembly is better. For example, when the length of the first sub-antenna 711 is set to 15 millimeters, the length of the second sub-antenna 712 is set to 8 millimeters, and a length of the first gap 703 is set to 1 millimeter, the first length of the third sub-antenna 713 may be set to 10 millimeters, the second length of the fourth sub-antenna 714 may be set to 7 millimeters, and a length of the second gap 706 is set to 1 millimeter. The first length is set to correspond to the length of the first sub-antenna 711, so that the third sub-antenna 713 and the fourth sub-antenna 714 can generate the fourth parasitic resonance with a working frequency higher than that of the second resonance, thereby increasing working bandwidth of the first sub-antenna 711. The second length is set to correspond to the length of the fourth sub-antenna 714, so that the third sub-antenna 713 and the fourth sub-antenna 714 can generate the second parasitic resonance with a working frequency higher than that of the third resonance, thereby increasing working bandwidth of the second sub-antenna 712.

It should be noted that, the first length and the second length shown in this application include but are not limited to the lengths described in the foregoing embodiment, and the first length and the second length need to be set based on an actual situation, so that corresponding parasitic resonances are generated at different frequency bands.

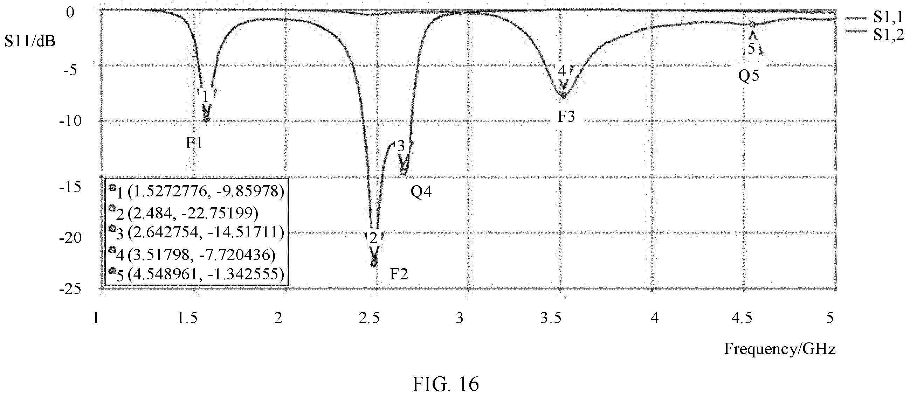

FIG. 16 is a diagram of a return loss of an antenna assembly according to an embodiment of this application. As shown in FIG. 16, when the first resonance F1 is at 1.6 GHz, and the second resonance F2 is at 2.4 GHz, the third sub-antenna 713 generates a fourth parasitic resonance Q4 at 2.7 GHz after receiving feeding, the fourth sub-antenna 714 generates a fifth parasitic resonance Q5 at 4.6 GHz after receiving feeding, and working bandwidth of the first sub-antenna 811 is increased from 2.4 GHz to 2.6 GHz.

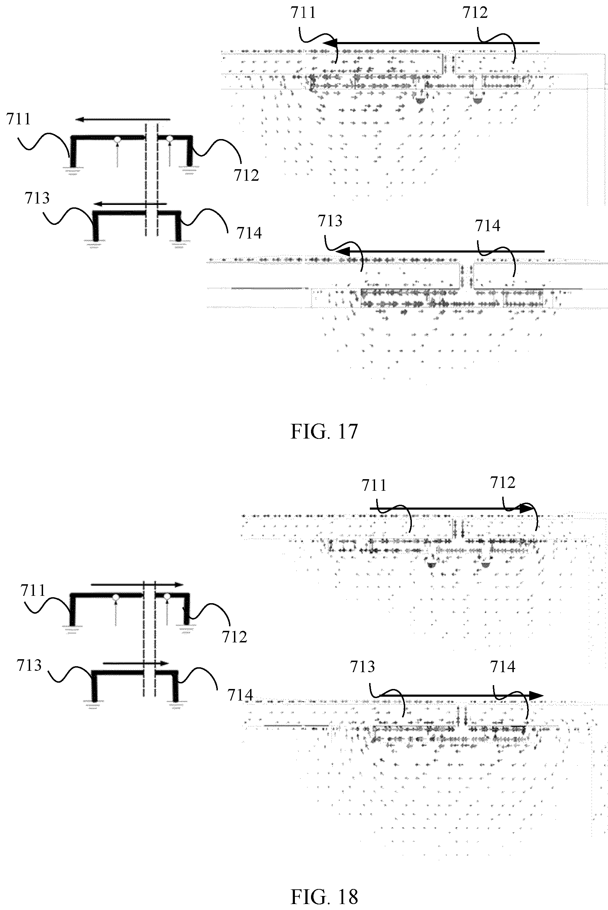

FIG. 17 is a schematic diagram of current distribution in a first resonance mode according to an embodiment of this application. As shown in FIG. 17, when the antenna assembly works in the first resonance mode, the first sub-antenna 711 and the second sub-antenna 712 are in a slot-antenna common-mode mode with strong current distribution, and current distribution of the third sub-antenna 713 and the fourth sub-antenna 714 is in a same direction as that of the first sub-antenna 711.

FIG. 18 is a schematic diagram of current distribution in a second resonance mode according to an embodiment of this application. As shown in FIG. 18, when the antenna assembly works in the second resonance mode, the first sub-antenna 711 and the second sub-antenna 712 are in a slot-antenna common-mode mode with strong current distribution, and current distribution of the third sub-antenna 713 and the fourth sub-antenna 714 is in a same direction as that of a current in the second sub-antenna 712.

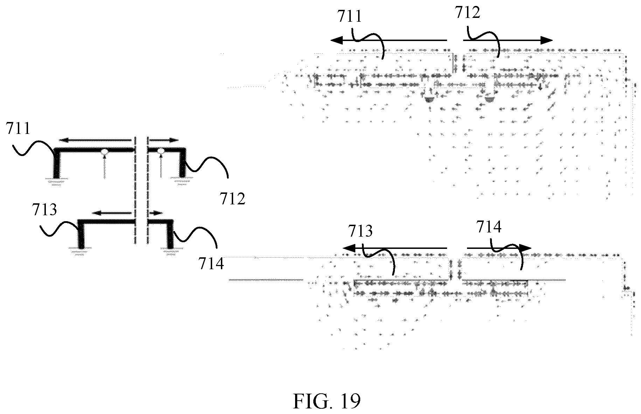

FIG. 19 is a schematic diagram of current distribution in a third resonance mode according to an embodiment of this application. As shown in FIG. 19, when the antenna assembly works in the third resonance mode, the first sub-antenna 711 and the second sub-antenna 712 are in a slot-antenna differential-mode mode with strong current distribution, current distribution of the third sub-antenna 713 is in a same direction as current distribution of the first sub-antenna 711 and is in the slot-antenna differential-mode mode, and current distribution of the fourth sub-antenna 714 is in a same direction as current distribution of the second sub-antenna 712 and is in the slot-antenna differential-mode mode.

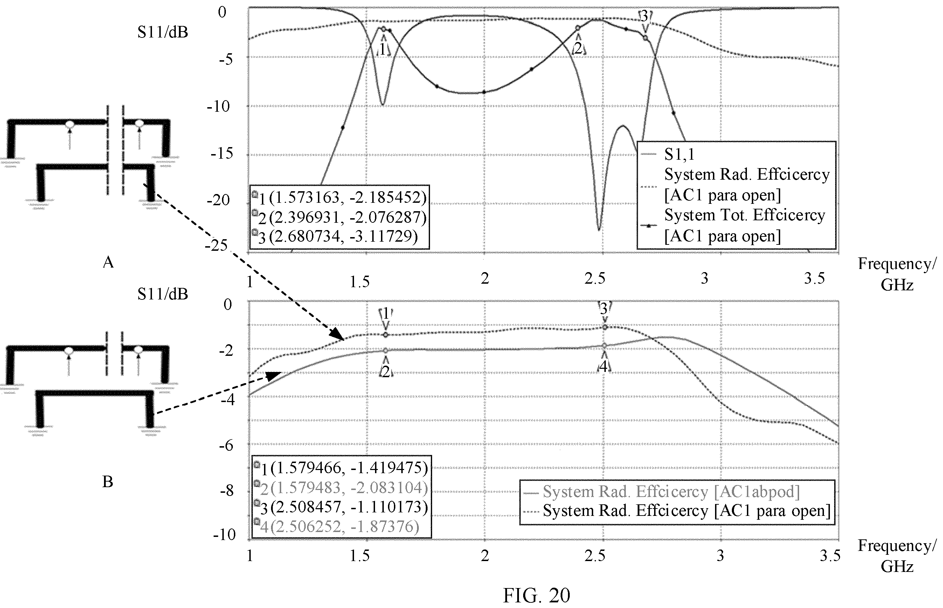

FIG. 20 is a schematic diagram of comparison between radiation efficiency effects according to an embodiment of this application. Through comparison between radiation efficiency of the antenna assembly that is in this embodiment of this application and that is shown by A in FIG. 20 and radiation efficiency of an antenna assembly that is shown by B in FIG. 20 and in which the second antenna 72 is not provided with the second gap 706, it may be found that when the foldable electronic device is in the folded state, compared with the antenna assembly in which the second antenna 72 is not provided with the second gap 706, for the antenna assembly shown in this embodiment of this application, radiation efficiency of the first resonance is improved by 0.6 dB, and radiation efficiency of the second resonance is improved by 0.7 dB.

The antenna assembly shown in this embodiment of this application can better increase bandwidth at the GPS frequency band and the N41, Wifi 2.4 GHz, and N78 working frequency bands, and better improve radiation efficiency at the GPS frequency band and the N41, Wifi 2.4 GHz, and N78 working frequency bands.

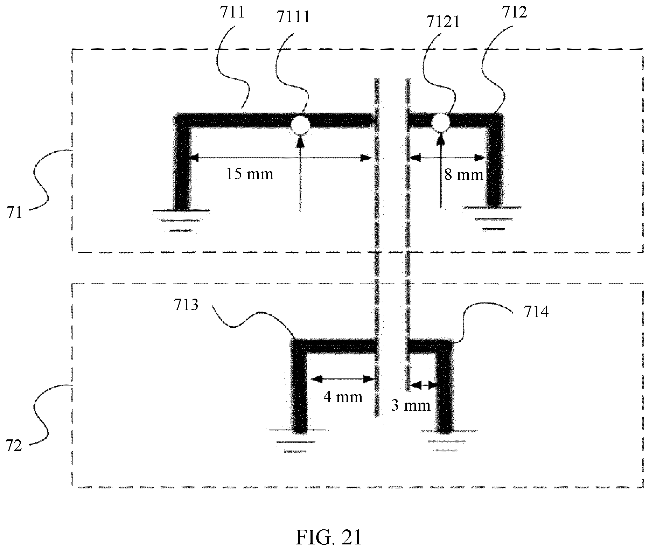

FIG. 21 is a third schematic diagram of an antenna assembly according to an embodiment of this application. As shown in FIG. 21, in the antenna assembly provided in this embodiment of this application, the first sub-antenna 711 includes a first antenna radiator and a first feed point 7111, and the first antenna radiator receives, by using the first feed point 7111, an electrical signal that is input by a first feed source, so that the first antenna radiator generates a first resonance and a second resonance. The second sub-antenna 712 includes a second antenna radiator and a second feed point 7121, and the second antenna radiator receives, by using the second feed point 7121, an electrical signal that is input by a second feed source, so that the second antenna radiator generates a third resonance.

In some embodiments, the third sub-antenna 713 includes a third radiator, and the fourth sub-antenna 714 includes a fourth radiator. When the third sub-antenna 713 is set to a third length and the fourth sub-antenna 714 is set to a fourth length, the third antenna radiator and the fourth antenna radiator generate a sixth parasitic resonance. A working frequency band of the sixth parasitic resonance is higher than that of the third resonance. The third length and the fourth length need to be set to correspond to a length of the first sub-antenna 711 and a length of the second sub-antenna 712. In this way, for the antenna assembly, radiation efficiency of the antenna assembly can be improved and working bandwidth of the antenna assembly can be increased by simply adjusting the third length and the fourth length.

For example, when the length of the first sub-antenna 711 is set to 15 millimeters, the length of the second sub-antenna 712 is set to 8 millimeters, and a length of the first gap 703 is set to 1 millimeter, the first length of the third sub-antenna 713 may be set to 4 millimeters, the second length of the fourth sub-antenna 714 may be set to 3 millimeters, and a length of the second gap 706 is set to 1 millimeter. The third length and the fourth length are set to correspond to a length of the first antenna 71, so that the fourth sub-antenna 714 can generate the third parasitic resonance with a working frequency higher than that of the third resonance, thereby increasing working bandwidth of the second sub-antenna 712.

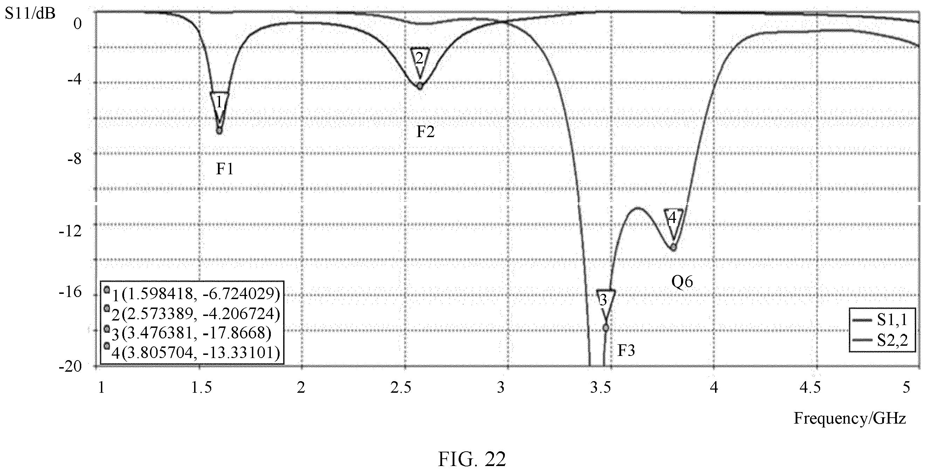

It should be noted that, the third length and the fourth length shown in this application include but are not limited to the lengths described in the foregoing embodiment, and lengths of the third antenna and the fourth antenna need to be set based on an actual situation, so that corresponding parasitic resonances are generated at different frequency bands. FIG. 22 is a schematic diagram of a return loss of an antenna assembly according to an embodiment of this application. As shown in FIG. 22, when the first resonance F1 is at 1.6 GHz, the second resonance F2 is at 2.4 GHz, and the third resonance F3 is at 3.5 GHz, the third sub-antenna 713 and the fourth sub-antenna 714 receive feeding and generate a sixth parasitic resonance Q6 at 3.8 GHz, and working bandwidth of the second sub-antenna 712 is increased from 3.5 GHz to 3.8 GHz, so that the antenna assembly can cover bandwidth at the N78 working frequency band. In the structure of the antenna assembly shown in this embodiment of this application, bandwidth of the third resonance may be increased by using the sixth parasitic resonance, and the first resonance and the second resonance are also improved.

Based on the foregoing structure, a manner in which the parasitic resonance generated by the second antenna 72 further performs a co-directional excitation current on the first antenna 71 may be as follows.

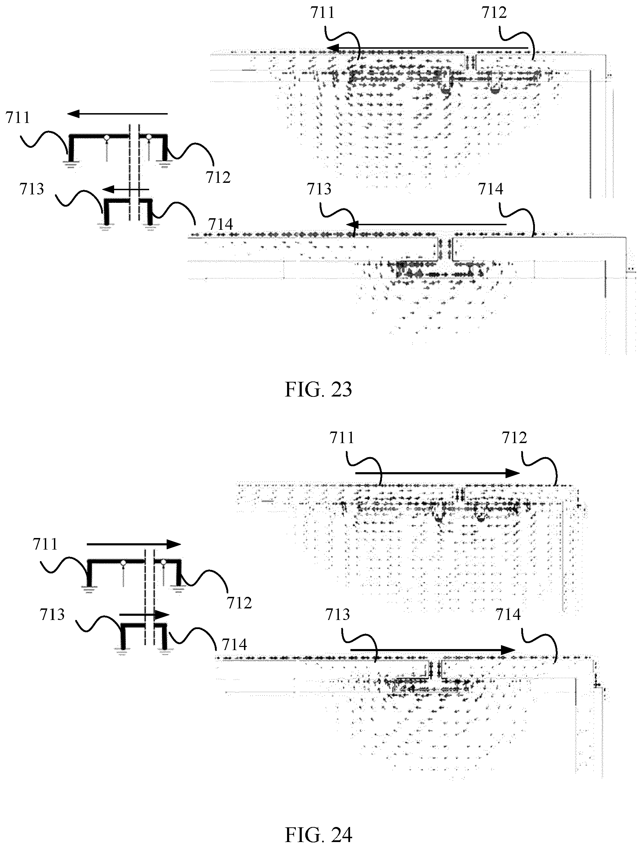

FIG. 23 is a schematic diagram of current distribution in a first resonance mode according to an embodiment of this application. As shown in FIG. 23, when the antenna assembly works in the first resonance mode, the first sub-antenna 711 and the second sub-antenna 712 are in a slot-antenna common-mode mode with strong current distribution, and current distribution of the third sub-antenna 713 and the fourth sub-antenna 714 is in a same direction as that of the first sub-antenna 711.

FIG. 24 is a schematic diagram of current distribution in a second resonance mode according to an embodiment of this application. As shown in FIG. 24, when the antenna assembly is in the second resonance mode, the first sub-antenna 711 and the second sub-antenna 712 are in a slot-antenna common-mode mode with strong current distribution, and current distribution of the third sub-antenna 713 and the fourth sub-antenna 714 is in a same direction as that of the second sub-antenna 712.

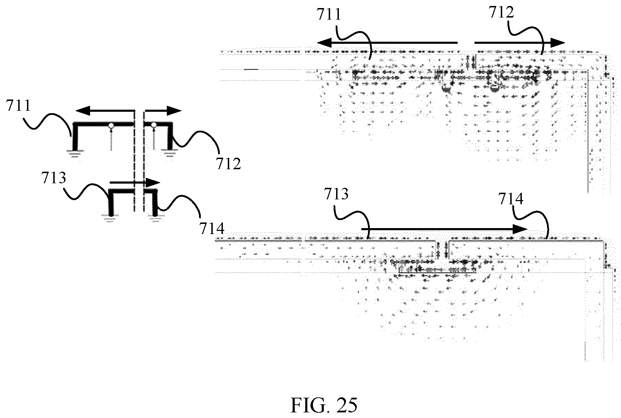

FIG. 25 is a schematic diagram of current distribution in a third resonance mode according to an embodiment of this application. As shown in FIG. 25, when the antenna assembly is in the third resonance mode, the first sub-antenna 711 and the second sub-antenna 712 are in a slot-antenna differential-mode mode with strong current distribution, and current distribution of the third sub-antenna 713 and the fourth sub-antenna 714 is in a same direction as that of the second sub-antenna 712.

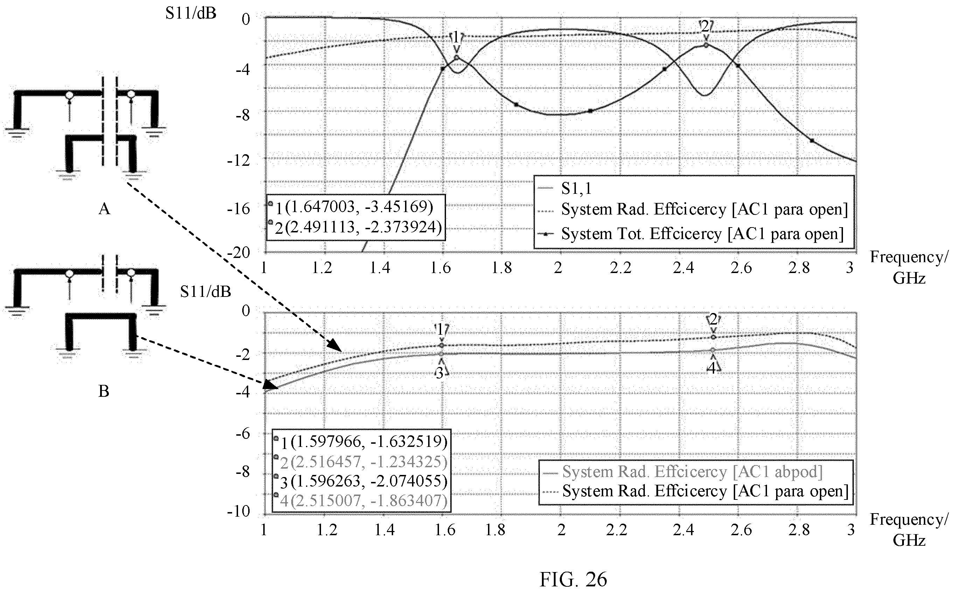

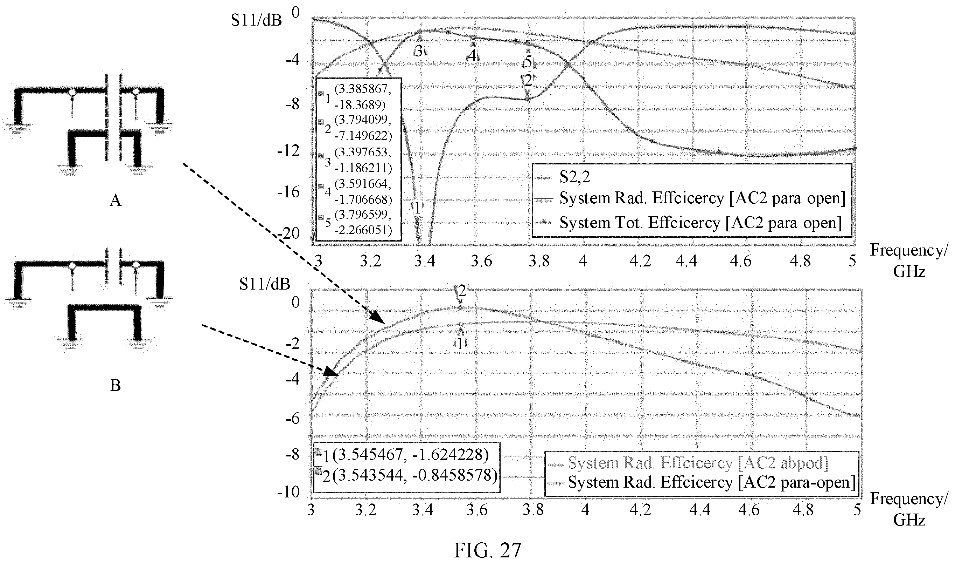

FIG. 26 and FIG. 27 are schematic diagrams of comparison between radiation efficiency effects according to an embodiment of this application. Through comparison between radiation efficiency of the antenna assembly that is in this embodiment of this application and that is shown by A in FIG. 20 and radiation efficiency of an antenna assembly that is shown by B in FIG. 20 and in which the second antenna 72 is not provided with the second gap 706, it may be found that when the folded electronic device is in the folded state, compared with the antenna assembly in which the second antenna 72 is not provided with the second gap 706, for the antenna assembly shown in this embodiment of this application, radiation efficiency of the first resonance is improved by 0.4 dB, radiation efficiency of the second resonance is improved by 0.6 dB, and as shown in FIG. 27, radiation efficiency of the third resonance is improved by 0.8 dB.

The antenna assembly shown in this embodiment of this application can better increase bandwidth at the GPS frequency band and the N41, Wifi 2.4 GHz, and N78 working frequency bands, and better improve radiation efficiency at the GPS frequency band and the N41, Wifi 2.4 GHz, and N78 working frequency bands.

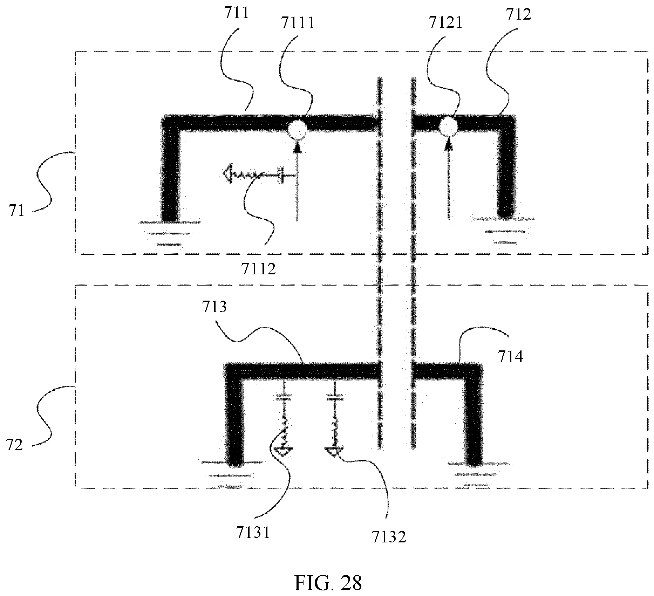

FIG. 28 is a fourth schematic diagram of an antenna assembly according to an embodiment of this application. As shown in FIG. 28, in the antenna assembly provided in this embodiment of this application, the first sub-antenna 711 includes a first antenna radiator, a first feed point 7111, and a third tuning circuit 7112. The third tuning circuit 7112 includes a third capacitor and a third inductor. The third tuning circuit 7112 is grounded. The first antenna radiator receives, by using the first feed point 7111, an electrical signal that is input by a first feed source, so that the first antenna radiator generates a first resonance and a second resonance. The second sub-antenna 712 includes a second antenna radiator and a second feed point 7121. The second antenna radiator receives, by using the second feed point 7121, an electrical signal that is input by a second feed source, so that the second antenna radiator generates a third resonance.

In some embodiments, the third sub-antenna 713 includes a third antenna radiator, a first tuning circuit 7131 and a second tuning circuit 7132. The first tuning circuit 7131 and the second tuning circuit 7132 are configured to adjust a working frequency band of the third antenna radiator. The fourth sub-antenna 714 includes a fourth antenna radiator.

In some embodiments, when the antenna assembly is in the first resonance mode, the first sub-antenna 711 is in a slot-antenna common-mode mode with strong current distribution, and current distribution of the third sub-antenna 713 and the fourth sub-antenna 714 is in a same direction as that of the first sub-antenna 711.

When the antenna assembly is in the second resonance mode, the second sub-antenna 712 is in a slot-antenna common-mode mode with strong current distribution, and current distribution of the third sub-antenna 713 and the fourth sub-antenna 714 is in a same direction as that of the second sub-antenna 712.

When the antenna assembly is in the third resonance mode, starting from the first feed point 7111, the first sub-antenna 711 and the second sub-antenna 712 are in a slot-antenna common-mode mode with strong current distribution, and current distribution of the third sub-antenna 713 and the fourth sub-antenna 714 is in a slot-antenna common-mode mode from the second tuning circuit 7132 to the fourth sub-antenna 714, and is in a same direction as current distribution of the second sub-antenna 712. The manner shown in this embodiment of this application may be used to perform an equivalent short circuit at an N78 working frequency band, thereby shortening a current distribution length of the first sub-antenna 711.

The antenna assembly shown in this embodiment of this application can better increase bandwidth at the GPS, N41, Wifi 2.4 GHz, and N78 working frequency bands, and better improve radiation efficiency at the GPS frequency band and the N41, Wifi 2.4 GHz, and N78 working frequency bands.

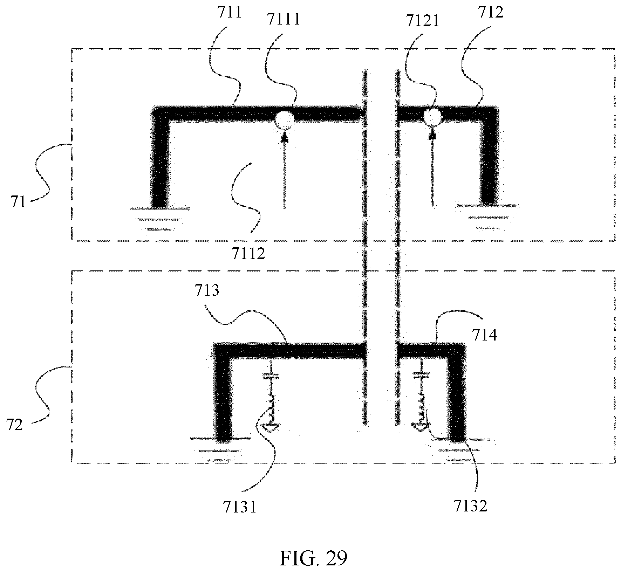

FIG. 29 is a fifth schematic diagram of an antenna assembly according to an embodiment of this application. As shown in FIG. 29, in the antenna assembly provided in this embodiment of this application, the first sub-antenna 711 includes a first antenna radiator and a first feed point 7111, and the first antenna radiator receives, by using the first feed point 7111, an electrical signal that is input by a first feed source, so that the first antenna radiator generates a first resonance and a second resonance. The second sub-antenna 712 includes a second antenna radiator and a second feed point 7121, and the second antenna radiator receives, by using the second feed point 7121, an electrical signal that is input by a second feed source, so that the second antenna radiator generates a third resonance.

The third sub-antenna 713 includes a third antenna radiator and a first tuning circuit 7131, the fourth sub-antenna 714 includes a fourth antenna radiator and a second tuning circuit 7132, and matching networks for the third sub-antenna 713 and the fourth sub-antenna may be adjusted by using the first tuning circuit 7131 and the second tuning circuit 7132 to generate parasitic resonances at different frequency bands. For a specific implementation, refer to the first antenna assembly. Details are not described again in this application.

The antenna assembly shown in this embodiment of this application can better increase bandwidth at the GPS, N41, Wifi 2.4 GHz, and N78 working frequency bands, and better improve radiation efficiency at the GPS frequency band and the N41, Wifi 2.4 GHz, and N78 working frequency bands.

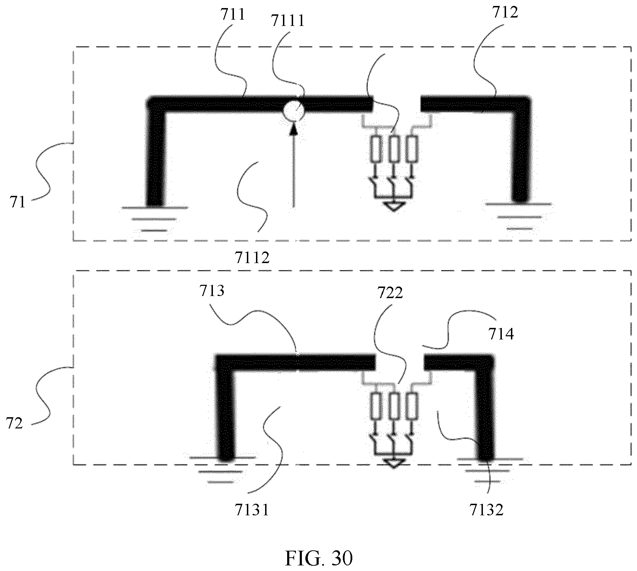

FIG. 30 is a sixth schematic diagram of an antenna assembly according to an embodiment of this application. As shown in FIG. 30, in the antenna assembly provided in this embodiment of this application, the first sub-antenna 711 includes a first antenna radiator and a first feed point 7111, and the first antenna radiator receives, by using the first feed point 7111, an electrical signal input by a first feed source, so that the first antenna radiator generates a first resonance and a second resonance. The second sub-antenna 712 includes a second antenna radiator. A first tuning switch 721 is disposed between the first sub-antenna 711 and the second sub-antenna 712, and the first tuning switch 721 is configured to adjust a working frequency band at which the first antenna radiator and the second antenna radiator generate a target resonance.

The third sub-antenna 713 includes a third antenna radiator, and the fourth sub-antenna 714 includes a fourth antenna radiator. A second tuning switch 722 is disposed between the third sub-antenna 713 and the fourth sub-antenna 714, and the second tuning switch 722 is configured to adjust a working frequency band at which the third antenna radiator and the fourth antenna radiator generate a target parasitic resonance, so that the working frequency band of the target parasitic resonance is greater than the working frequency band of the target resonance.

In this embodiment, only the first sub-antenna 711 is provided with the first feed point 7111, and the second sub-antenna 712 is provided with no feed point. The first sub-antenna 711 may generate a first resonance at 1.6 GHz and a second resonance at 2.4 GHz. Therefore, the second sub-antenna 712 may be fed by using the first tuning switch 721, so that the second sub-antenna 712 generates the target resonance. For example, the target resonance may be at 3.5 GHz. When the antenna assembly needs to work in the first resonance mode, the first tuning switch 721 may be not connected to the second sub-antenna 712. When the antenna assembly needs to work in the third resonance mode, the first tuning switch 721 may be connected to the second sub-antenna 712.

Correspondingly, the second tuning switch 722 may feed the fourth sub-antenna 714, so that the fourth sub-antenna 714 generates the target parasitic resonance. For example, the target parasitic resonance may be at 3.8 GHz. When the second sub-antenna 712 needs to work in the third resonance mode, the second tuning switch 722 may be correspondingly connected to the fourth sub-antenna 714, so that the fourth sub-antenna 714 can generate a third parasitic resonance of the third resonance.

The antenna assembly shown in this embodiment of this application can better increase bandwidth at the GPS, N41, Wifi 2.4 GHz, and N78 working frequency bands, and better improve radiation efficiency at the GPS frequency band and the N41, Wifi 2.4 GHz, and N78 working frequency bands. When the antenna assembly is applied to a foldable electronic device, the foldable electronic device can have better communication performance in a folded state, thereby improving user experience.

An embodiment of this application further provides an electronic device, including the antenna assembly provided in the foregoing embodiments. The electronic device may include, for example, a mobile terminal, a tablet computer, a personal computer, a workstation device, a large-screen device (for example, a smart screen or a smart television), a handheld game console, a home game console, a virtual reality device, an augmented reality device, a hybrid reality device or the like, an in-vehicle intelligent terminal, a self-driving vehicle, customer-premises equipment (customer-premises equipment, CPE), and the like.

It should be understood that in various embodiments in the embodiments of this application, sequence numbers of the processes do not mean an execution sequence. The execution sequence of the processes should be determined based on functions and internal logic of the processes, and should not be construed as any limitation on the implementation processes of the embodiments.

The parts of this specification are all described in a progressive manner, and for same or similar parts in the embodiments, reference may be made to each other. Descriptions of each embodiment focus on a difference from other embodiments. Especially, for the apparatus and system embodiments, the apparatus and system embodiments are basically similar to the method embodiment, and therefore are described briefly. For related parts, refer to the partial description of the method embodiment.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. The scope of protection is defined by the appended claims.

## Claims

1. An antenna assembly, applied to a foldable electronic device, wherein the electronic device comprises a first body (101) and a second body (102), and the first body (101) and the second body (102) are rotatably connected by using a rotating shaft;
the antenna assembly comprises a first antenna (71) disposed on the first body (101) and a second antenna (72) disposed on the second body (102);
the first antenna (71) comprises a first end (701) away from the rotating shaft and a second end (702) close to the rotating shaft, a first gap (703) is disposed between the first end (701) and the second end (702), and the first end (701) and the second end (702) are grounded; the first antenna (71) comprises at least one feed point; and the first antenna (71) is configured to generate a resonance at more than one frequency band;
the second antenna (72) comprises a third end (704) away from the rotating shaft and a fourth end (705) close to the rotating shaft, a second gap (706) is disposed between the third end (704) and the fourth end (705), and the third end (704) and the fourth end (705) are grounded; and
when the first body (101) and the second body (102) are in a folded state, the first gap (703) is in an orthographic projection area of the second gap (706), so that the second antenna (72) performs energy coupling by using the first gap (703) and the second gap (706) to form a parasitic structure of the first antenna (71), wherein the second antenna (72) is configured to generate a parasitic resonance at one or more than one frequency band;
wherein the first antenna (71) comprises a first sub-antenna (711), and the first sub-antenna (711) is an antenna between the first end (701) and the first gap (703); and
the first sub-antenna (711) comprises a first antenna radiator and a first feed point (7111), and the first antenna radiator receives, by using the first feed point (7111), an electrical signal that is input by a first feed source, so that the first antenna radiator generates a first resonance and a second resonance;
wherein the first antenna (71) comprises a second sub-antenna (712), and the second sub-antenna (712) is an antenna between the second end (702) and the first gap (703); and
the second sub-antenna (712) comprises a second antenna radiator and a second feed point, and the second antenna radiator receives, by using the second feed point, an electrical signal that is input by a second feed source, so that the second antenna radiator generates a third resonance;
**characterised in that** the antenna assembly comprises at least one of a first resonance mode, a second resonance mode, and a third resonance mode; and
the first resonance mode is a mode in which the antenna assembly works at a working frequency band corresponding to the first resonance, and is used to support receiving and sending of an electromagnetic wave signal at the working frequency band corresponding to the first resonance; the second resonance mode is a mode in which the antenna assembly works at a working frequency band corresponding to the second resonance, and is used to support receiving and sending of an electromagnetic wave signal at the working frequency band corresponding to the second resonance; and the third resonance mode is a mode in which the antenna assembly works at a working frequency band corresponding to the third resonance, and is used to support receiving and sending of an electromagnetic wave signal at the working frequency band corresponding to the third resonance;
wherein the second antenna (72) comprises a third sub-antenna (713) and a fourth sub-antenna (714), the third sub-antenna (713) is an antenna between the third end (704) and the second gap (706), the fourth sub-antenna (714) is an antenna between the fourth end (705) and the second gap (706), the third sub-antenna (713) comprises a third antenna radiator, a first tuning circuit (7131), and a second tuning circuit (7132), and the fourth sub-antenna (714) comprises a fourth antenna radiator; and
the first tuning circuit (7131) and the second tuning circuit (7132) are configured to adjust working frequency bands corresponding to the third antenna radiator and the fourth antenna radiator, so that the third antenna radiator and the fourth antenna radiator generate a first parasitic resonance, a second parasitic resonance, and a third parasitic resonance, wherein a working frequency band corresponding to the first parasitic resonance is higher than that of the first resonance, a working frequency band corresponding to the second parasitic resonance is higher than that of the second resonance, and a working frequency band corresponding to the third parasitic resonance is higher than that of the third resonance.

2. The antenna assembly according to claim 1, wherein
when the antenna assembly is in the first resonance mode, the first sub-antenna (711) and the second sub-antenna (712) are in a slot-antenna common-mode mode with strong current distribution, and current distribution of the third sub-antenna (713) and the fourth sub-antenna (714) is in a same direction as that of the first sub-antenna (711);
when the antenna assembly is in the second resonance mode, the first sub-antenna (711) and the second sub-antenna (712) are in a slot-antenna common-mode mode with strong current distribution, and current distribution of the third sub-antenna (713) and the fourth sub-antenna (714) is in a same direction as that of the second sub-antenna (712); or
when the antenna assembly is in the third resonance mode, the first sub-antenna (711) and the second sub-antenna (712) are in a slot-antenna differential-mode mode with strong current distribution, and current distribution of the third sub-antenna (713) and the fourth sub-antenna (714) is in a slot-antenna common-mode mode from the second tuning circuit (7132) to the fourth sub-antenna (714), and is in a same direction as current distribution of the second sub-antenna (712), wherein the second tuning circuit (7132) is a tuning circuit close to one end of the second gap (706).

3. The antenna assembly according to claim 1, wherein
the first sub-antenna (711) further comprises a third tuning circuit, and the third tuning circuit is configured to be grounded; and
when the antenna assembly is in the first resonance mode, the first sub-antenna (711) and the second sub-antenna (712) are in a slot-antenna common-mode mode with strong current distribution, and current distribution of the third sub-antenna (713) and the fourth sub-antenna (714) is in a same direction as that of the first sub-antenna (711);
when the antenna assembly is in the second resonance mode, the first sub-antenna (711) and the second sub-antenna (712) are in a slot-antenna common-mode mode with strong current distribution, and current distribution of the third sub-antenna (713) and the fourth sub-antenna (714) is in a same direction as that of the second sub-antenna (712); or
when the antenna assembly is in the third resonance mode, the first sub-antenna (711) and the second sub-antenna (712) are in a slot-antenna differential-mode mode with strong current distribution, and current distribution of the third sub-antenna (713) and the fourth sub-antenna (714) is in a slot-antenna common-mode mode from the second tuning circuit to the fourth sub-antenna (714), and is in a same direction as current distribution of the second sub-antenna (712).

4. An electronic device, comprising:
a first body (101) and a second body (102), and the first body (101) and the second body (102) are rotatably connected by using a rotating shaft;
the antenna assembly according to any one of claims 1~3.

## Patentansprüche

1. Antennenanordnung, die bei einer faltbaren elektronischen Vorrichtung angewendet wird, wobei die elektronische Vorrichtung einen ersten Körper (101) und einen zweiten Körper (102) umfasst, und wobei der erste Körper (101) und der zweite Körper (102) mittels einer Drehwelle drehbar verbunden sind;
die Antennenanordnung umfasst eine erste Antenne (71), die an dem ersten Körper (101) angeordnet ist, und eine zweite Antenne (72), die an dem zweiten Körper (102) angeordnet ist;
die erste Antenne (71) umfasst ein erstes Ende (701) entfernt von der Drehwelle und ein zweites Ende (702) nahe der Drehwelle, wobei ein erster Spalt (703) zwischen dem ersten Ende (701) und dem zweiten Ende (702) angeordnet ist, und wobei das erste Ende (701) und das zweite Ende (702) geerdet sind; die erste Antenne (71) umfasst mindestens einen Speisepunkt; und die erste Antenne (71) ist dazu konfiguriert, eine Resonanz in mehr als einem Frequenzband zu erzeugen;
die zweite Antenne (72) umfasst ein drittes Ende (704) entfernt von der Drehwelle und ein viertes Ende (705) nahe der Drehwelle, wobei ein zweiter Spalt (706) zwischen dem dritten Ende (704) und dem vierten Ende (705) angeordnet ist, und wobei das dritte Ende (704) und das vierte Ende (705) geerdet sind; und
wenn sich der erste Körper (101) und der zweite Körper (102) in einem gefalteten Zustand befinden, liegt der erste Spalt (703) in einem orthogonalen Projektionsbereich des zweiten Spalts (706), so dass die zweite Antenne (72) eine Energiekopplung unter Verwendung des ersten Spalts (703) und des zweiten Spalts (706) durchführt, um eine parasitäre Struktur der ersten Antenne (71) zu bilden, wobei die zweite Antenne (72) dazu konfiguriert ist, eine parasitäre Resonanz in einem oder mehr als einem Frequenzband zu erzeugen;
wobei die erste Antenne (71) eine erste Teilantenne (711) umfasst, und die erste Teilantenne (711) eine Antenne zwischen dem ersten Ende (701) und dem ersten Spalt (703) ist; und
die erste Teilantenne (711) umfasst einen ersten Antennenstrahler und einen ersten Speisepunkt (7111), und der erste Antennenstrahler empfängt mittels des ersten Speisepunkts (7111) ein elektrisches Signal, das von einer ersten Speisequelle eingegeben wird, so dass der erste Antennenstrahler eine erste Resonanz und eine zweite Resonanz erzeugt;
wobei die erste Antenne (71) eine zweite Teilantenne (712) umfasst, und die zweite Teilantenne (712) eine Antenne zwischen dem zweiten Ende (702) und dem ersten Spalt (703) ist; und
die zweite Teilantenne (712) umfasst einen zweiten Antennenstrahler und einen zweiten Speisepunkt, und der zweite Antennenstrahler empfängt mittels des zweiten Speisepunkts ein elektrisches Signal, das von einer zweiten Speisequelle eingegeben wird, so dass der zweite Antennenstrahler eine dritte Resonanz erzeugt;
**dadurch gekennzeichnet, dass** die Antennenanordnung mindestens einen aus einem ersten Resonanzmodus, einem zweiten Resonanzmodus und einem dritten Resonanzmodus umfasst; und
Der erste Resonanzmodus ist ein Modus, in dem die Antennenbaugruppe in einem Arbeitsfrequenzband arbeitet, das der ersten Resonanz entspricht, und dazu dient, das Empfangen und Senden eines elektromagnetischen Wellensignals in dem der ersten Resonanz entsprechenden Arbeitsfrequenzband zu unterstützen; der zweite Resonanzmodus ist ein Modus, in dem die Antennenbaugruppe in einem Arbeitsfrequenzband arbeitet, das der zweiten Resonanz entspricht, und dazu dient, das Empfangen und Senden eines elektromagnetischen Wellensignals in dem der zweiten Resonanz entsprechenden Arbeitsfrequenzband zu unterstützen; und der dritte Resonanzmodus ist ein Modus, in dem die Antennenbaugruppe in einem Arbeitsfrequenzband arbeitet, das der dritten Resonanz entspricht, und dazu dient, das Empfangen und Senden eines elektromagnetischen Wellensignals in dem der dritten Resonanz entsprechenden Arbeitsfrequenzband zu unterstützen;
wobei die zweite Antenne (72) eine dritte Subantenne (713) und eine vierte Subantenne (714) umfasst, die dritte Subantenne (713) eine Antenne zwischen dem dritten Ende (704) und dem zweiten Spalt (706) ist, die vierte Subantenne (714) eine Antenne zwischen dem vierten Ende (705) und dem zweiten Spalt (706) ist, die dritte Subantenne (713) einen dritten Antennenstrahler, eine erste Abstimmtschaltung (7131) und eine zweite Abstimmtschaltung (7132) umfasst und die vierte Subantenne (714) einen vierten Antennenstrahler umfasst; und
die erste Abstimmtschaltung (7131) und die zweite Abstimmtschaltung (7132) dazu konfiguriert sind, Arbeitsfrequenzbänder anzupassen, die dem dritten Antennenstrahler und dem vierten Antennenstrahler entsprechen, sodass der dritte Antennenstrahler und der vierte Antennenstrahler eine erste parasitäre Resonanz, eine zweite parasitäre Resonanz und eine dritte parasitäre Resonanz erzeugen, wobei ein Arbeitsfrequenzband, das der ersten parasitären Resonanz entspricht, höher ist als das der ersten Resonanz, ein Arbeitsfrequenzband, das der zweiten parasitären Resonanz entspricht, höher ist als das der zweiten Resonanz und ein Arbeitsfrequenzband, das der dritten parasitären Resonanz entspricht, höher ist als das der dritten Resonanz.

2. Antennenbaugruppe nach Anspruch 1, wobei
wenn sich die Antennenbaugruppe im ersten Resonanzmodus befindet, sich die erste Subantenne (711) und die zweite Subantenne (712) in einem Schlitzantennen-Gleichtaktmodus mit starker Stromverteilung befinden und die Stromverteilung der dritten Subantenne (713) und der vierten Subantenne (714) in der gleichen Richtung wie die der ersten Subantenne (711) verläuft;
wenn sich die Antennenbaugruppe im zweiten Resonanzmodus befindet, sich die erste Subantenne (711) und die zweite Subantenne (712) in einem Schlitzantennen-Gleichtaktmodus mit starker Stromverteilung befinden und die Stromverteilung der dritten Subantenne (713) und der vierten Subantenne (714) in der gleichen Richtung wie die der zweiten Subantenne (712) verläuft; oder
Wenn sich die Antennenanordnung im dritten Resonanzmodus befindet, befinden sich die erste Teilantenne (711) und die zweite Teilantenne (712) in einem Schlitzantennen-Differentialmodus mit starker Stromverteilung, und die Stromverteilung der dritten Teilantenne (713) und der vierten Teilantenne (714) befindet sich in einem Schlitzantennen-Gleichtaktmodus von der zweiten Abstimmschaltung (7132) zur vierten Teilantenne (714) und verläuft in derselben Richtung wie die Stromverteilung der zweiten Teilantenne (712), wobei die zweite Abstimmschaltung (7132) eine Abstimmschaltung nahe an einem Ende des zweiten Spalts (706) ist.

3. Antennenanordnung nach Anspruch 1, wobei
die erste Teilantenne (711) ferner eine dritte Abstimmschaltung umfasst und die dritte Abstimmschaltung so konfiguriert ist, dass sie geerdet ist; und
wenn sich die Antennenanordnung im ersten Resonanzmodus befindet, befinden sich die erste Teilantenne (711) und die zweite Teilantenne (712) in einem Schlitzantennen-Gleichtaktmodus mit starker Stromverteilung, und die Stromverteilung der dritten Teilantenne (713) und der vierten Teilantenne (714) verläuft in derselben Richtung wie die der ersten Teilantenne (711);
wenn sich die Antennenanordnung im zweiten Resonanzmodus befindet, befinden sich die erste Teilantenne (711) und die zweite Teilantenne (712) in einem Schlitzantennen-Gleichtaktmodus mit starker Stromverteilung, und die Stromverteilung der dritten Teilantenne (713) und der vierten Teilantenne (714) verläuft in derselben Richtung wie die der zweiten Teilantenne (712); oder
wenn sich die Antennenanordnung im dritten Resonanzmodus befindet, befinden sich die erste Teilantenne (711) und die zweite Teilantenne (712) in einem Schlitzantennen-Differentialmodus mit starker Stromverteilung, und die Stromverteilung der dritten Teilantenne (713) und der vierten Teilantenne (714) befindet sich in einem Schlitzantennen-Gleichtaktmodus von der zweiten Abstimmschaltung zur vierten Teilantenne (714) und verläuft in derselben Richtung wie die Stromverteilung der zweiten Teilantenne (712).

4. Elektronische Vorrichtung, umfassend:
einen ersten Körper (101) und einen zweiten Körper (102), wobei der erste Körper (101) und der zweite Körper (102) unter Verwendung einer Drehwelle drehbar verbunden sind;
die Antennenanordnung nach einem der Ansprüche 1 bis 3.

## Revendications

1. Ensemble d'antenne, appliqué à un dispositif électronique pliable, dans lequel le dispositif électronique comprend un premier corps (101) et un second corps (102), et le premier corps (101) et le second corps (102) sont reliés de manière rotative au moyen d'un arbre rotatif ;
l'ensemble d'antenne comprend une première antenne (71) disposée sur le premier corps (101) et une seconde antenne (72) disposée sur le second corps (102) ;
la première antenne (71) comprend une première extrémité (701) éloignée de l'arbre rotatif et une seconde extrémité (702) proche de l'arbre rotatif, un premier espace (703) est disposé entre la première extrémité (701) et la seconde extrémité (702), et la première extrémité (701) et la seconde extrémité (702) sont mises à la terre ; la première antenne (71) comprend au moins un point d'alimentation ; et la première antenne (71) est configurée pour générer une résonance dans plus d'une bande de fréquences ;
la seconde antenne (72) comprend une troisième extrémité (704) éloignée de l'arbre rotatif et une quatrième extrémité (705) proche de l'arbre rotatif, un second espace (706) est disposé entre la troisième extrémité (704) et la quatrième extrémité (705), et la troisième extrémité (704) et la quatrième extrémité (705) sont mises à la terre ; et
lorsque le premier corps (101) et le second corps (102) sont dans un état plié, le premier espace (703) est dans une zone de projection orthogonale du second espace (706), de sorte que la seconde antenne (72) effectue un couplage d'énergie au moyen du premier espace (703) et du second espace (706) pour former une structure parasite de la première antenne (71), dans lequel la seconde antenne (72) est configurée pour générer une résonance parasite dans une ou plusieurs bandes de fréquences ;
dans lequel la première antenne (71) comprend une première sous-antenne (711), et la première sous-antenne (711) est une antenne située entre la première extrémité (701) et le premier espace (703) ; et
la première sous-antenne (711) comprend un premier radiateur d'antenne et un premier point d'alimentation (7111), et le premier radiateur d'antenne reçoit, au moyen du premier point d'alimentation (7111), un signal électrique qui est entré par une première source d'alimentation, de sorte que le premier radiateur d'antenne génère une première résonance et une seconde résonance ;
dans lequel la première antenne (71) comprend une seconde sous-antenne (712), et la seconde sous-antenne (712) est une antenne située entre la seconde extrémité (702) et le premier espace (703) ; et
la seconde sous-antenne (712) comprend un second radiateur d'antenne et un second point d'alimentation, et le second radiateur d'antenne reçoit, au moyen du second point d'alimentation, un signal électrique qui est entré par une seconde source d'alimentation, de sorte que le second radiateur d'antenne génère une troisième résonance ;
**caractérisé en ce que** l'ensemble d'antenne comprend au moins l'un parmi un premier mode de résonance, un second mode de résonance et un troisième mode de résonance ; et
le premier mode de résonance est un mode dans lequel l'ensemble d'antenne fonctionne dans une bande de fréquences de travail correspondant à la première résonance, et est utilisé pour prendre en charge la réception et l'émission d'un signal d'onde électromagnétique dans la bande de fréquences de travail correspondant à la première résonance ; le deuxième mode de résonance est un mode dans lequel l'ensemble d'antenne fonctionne dans une bande de fréquences de travail correspondant à la deuxième résonance, et est utilisé pour prendre en charge la réception et l'émission d'un signal d'onde électromagnétique dans la bande de fréquences de travail correspondant à la deuxième résonance ; et le troisième mode de résonance est un mode dans lequel l'ensemble d'antenne fonctionne dans une bande de fréquences de travail correspondant à la troisième résonance, et est utilisé pour prendre en charge la réception et l'émission d'un signal d'onde électromagnétique dans la bande de fréquences de travail correspondant à la troisième résonance ;
dans lequel la deuxième antenne (72) comprend une troisième sous-antenne (713) et une quatrième sous-antenne (714), la troisième sous-antenne (713) est une antenne entre la troisième extrémité (704) et le deuxième intervalle (706), la quatrième sous-antenne (714) est une antenne entre la quatrième extrémité (705) et le deuxième intervalle (706), la troisième sous-antenne (713) comprend un troisième radiateur d'antenne, un premier circuit d'accord (7131) et un deuxième circuit d'accord (7132), et la quatrième sous-antenne (714) comprend un quatrième radiateur d'antenne ; et
le premier circuit d'accord (7131) et le deuxième circuit d'accord (7132) sont configurés pour ajuster les bandes de fréquences de travail correspondant au troisième radiateur d'antenne et au quatrième radiateur d'antenne, de sorte que le troisième radiateur d'antenne et le quatrième radiateur d'antenne génèrent une première résonance parasite, une deuxième résonance parasite et une troisième résonance parasite, dans lequel une bande de fréquences de travail correspondant à la première résonance parasite est supérieure à celle de la première résonance, une bande de fréquences de travail correspondant à la deuxième résonance parasite est supérieure à celle de la deuxième résonance, et une bande de fréquences de travail correspondant à la troisième résonance parasite est supérieure à celle de la troisième résonance.

2. L'ensemble d'antenne selon la revendication 1, dans lequel
lorsque l'ensemble d'antenne est dans le premier mode de résonance, la première sous-antenne (711) et la deuxième sous-antenne (712) sont dans un mode commun d'antenne à fente avec une forte distribution de courant, et la distribution de courant de la troisième sous-antenne (713) et de la quatrième sous-antenne (714) est dans la même direction que celle de la première sous-antenne (711) ;
lorsque l'ensemble d'antenne est dans le deuxième mode de résonance, la première sous-antenne (711) et la deuxième sous-antenne (712) sont dans un mode commun d'antenne à fente avec une forte distribution de courant, et la distribution de courant de la troisième sous-antenne (713) et de la quatrième sous-antenne (714) est dans la même direction que celle de la deuxième sous-antenne (712) ; ou
lorsque l'ensemble d'antenne est dans le troisième mode de résonance, la première sous-antenne (711) et la deuxième sous-antenne (712) sont dans un mode différentiel d'antenne à fente avec une forte distribution de courant, et la distribution de courant de la troisième sous-antenne (713) et de la quatrième sous-antenne (714) est dans un mode commun d'antenne à fente du deuxième circuit d'accord (7132) vers la quatrième sous-antenne (714), et est dans la même direction que la distribution de courant de la deuxième sous-antenne (712), dans lequel le deuxième circuit d'accord (7132) est un circuit d'accord proche d'une extrémité de la deuxième fente (706).

3. L'ensemble d'antenne selon la revendication 1, dans lequel
la première sous-antenne (711) comprend en outre un troisième circuit d'accord, et le troisième circuit d'accord est configuré pour être mis à la terre ; et
lorsque l'ensemble d'antenne est dans le premier mode de résonance, la première sous-antenne (711) et la deuxième sous-antenne (712) sont dans un mode commun d'antenne à fente avec une forte distribution de courant, et la distribution de courant de la troisième sous-antenne (713) et de la quatrième sous-antenne (714) est dans la même direction que celle de la première sous-antenne (711) ;
lorsque l'ensemble d'antenne est dans le deuxième mode de résonance, la première sous-antenne (711) et la deuxième sous-antenne (712) sont dans un mode commun d'antenne à fente avec une forte distribution de courant, et la distribution de courant de la troisième sous-antenne (713) et de la quatrième sous-antenne (714) est dans la même direction que celle de la deuxième sous-antenne (712) ; ou
lorsque l'ensemble d'antenne est dans le troisième mode de résonance, la première sous-antenne (711) et la deuxième sous-antenne (712) sont dans un mode différentiel d'antenne à fente avec une forte distribution de courant, et la distribution de courant de la troisième sous-antenne (713) et de la quatrième sous-antenne (714) est dans un mode commun d'antenne à fente du deuxième circuit d'accord vers la quatrième sous-antenne (714), et est dans la même direction que la distribution de courant de la deuxième sous-antenne (712).

4. Un dispositif électronique, comprenant :
un premier corps (101) et un deuxième corps (102), et le premier corps (101) et le deuxième corps (102) sont reliés de manière rotative au moyen d'un arbre rotatif ;
l'ensemble d'antenne selon l'une quelconque des revendications 1 à 3.
